# EUROPÄISCHE PATENTANMELDUNG

(11) **EP 2 428 465 A1**
(43) Veröffentlichungstag der Anmeldung: **14.03.2012**
(21) Anmeldenummer: 11186975.6
(22) Anmeldetag: 23.05.2007
(51) Int. Cl.: B65G 1/137

(54) **Regallager und Kommissionierverfahren**

(30) Priorität: 24.05.2006 DE 102006025620
(62) Teilanmeldung aus: 07725436.5
(71) Anmelder: SSI Schäfer Noell GmbH Lager-und Systemtechnik, 97232 Giebelstadt (DE)
(72) Erfinder: Schäfer, Gerhard, 57290 Neunkirchen (DE)
(74) Vertreter: Witte, Weller & Partner

(57) **Zusammenfassung**

Offenbart wird ein Kommissionierverfahren und ein Regallager (10') zum Kommissionieren von in Ladehilfsmitteln (52), mit: zumindest einem Regal mit einer ersten und zweiten Längsseite (24,25) und zwei Stirnseiten, wobei das Regal mehrere Regalebenen (42,44) aufweist, wobei jede Regalebene (42,44) eine Vielzahl von Regalzeilen (46) aufweist, wobei die Regalzeilen (46) übereinander angeordnet sind und jeweils eine Vielzahl von nebeneinander angeordneten Regalplätzen (48) umfassen; zumindest einem Regalbediengerät (33) pro Regalebene (42,44), das zumindest ein Lastaufnahmemittel zum Einlagern und Auslagern von Ladehilfsmitteln (52) in die bzw. aus den Regalplätzen (48) einer Regalebene (42,44) aufweist, wobei das Regalbediengerät in horizontaler und vertikaler Richtung (39,35) entlang der ersten Längsseite (25) des Regals verfahrbar ist, um in seiner Regalebene (42,44) Ladehilfsmittel (52) einzulagern und auszulagern; und mehreren vertikalen Lifteinheiten (26), die an der zweiten Längsseite (24) des Regals (10') angeordnet sind und die ein Lastaufnahmemittel zum Abholen und Abgeben von Ladehilfsmitteln (52) von bzw. an Transferregallagerplätzen aufweisen.

## Beschreibung

Die vorliegende Erfindung betrifft ein Regallager zum Kommissionieren von in Ladehilfsmitteln gelagerten Waren bzw. Artikeln und betrifft insbesondere ein Kommissioniersystem mit einem solchen Regallager.

Die vorliegende Erfindung betrifft ferner ein Kommissionierverfahren zum Kommissionieren von einer Vielzahl von verschiedenen Waren- bzw. Artikeltypen, die auf oder in Ladehilfsmitteln, insbesondere Tablaren, gelagert sind, wobei die Kommissionierung gemäß einem Kommissionierauftrag erfolgt.

Aufgrund immer größer werdender Warensortimente und immer kürzer werdenden Zeitfenster, innerhalb denen Waren z.B. von einem Zentrallager an Filialen geliefert werden müssen, werden Unternehmen vor immer größer werdende logistische Probleme gestellt. Beispielhaft werden hier große Einzelhandelsunternehmen genannt, wie z.B. Warenhäuser, Direktversender oder Lebensmittelhändler. In Fachkreisen wird dafür üblicherweise der Begriff "Retail" verwendet. Unter "Retail" versteht man den insbesondere den Einzelhandel, aber auch den Kleinhandel, Kleinverkauf oder das Detailgeschäft, wie es z.B. bei einem Sortimentsbuchhändler vorliegt.

Eine grundsätzliche Forderung dabei ist, entweder möglichst viele Waren zentral auf Vorrat zu halten, vorzugsweise auch für längere Zeiträume, oder einen ausreichend großen Umschlagplatz ("cross docking") bereitzuhalten. Auf Vorrat gehaltenen Waren müssen, sobald ein Kommissionierauftrag eingeht, schnellstmöglich zusammengestellt und zum Auftraggeber gesendet werden. Unter einem Kommissionierauftrag wird nachfolgend eine Zusammenstellung einer Vielzahl von verschiedenen Warentypen in den unterschiedlichsten Anzahlen verstanden werden.

Im Stand der Technik werden große Zentrallager oder dezentrale Lager vorgeschlagen, die geografisch möglichst optimal (d.h. zentral) gelegen sind, um Waren an möglichst viele zugehörige Filialen liefern zu können. Um Lieferzeiten möglichst kurz zu halten, während die Anzahl der verschiedenen Warentypen im Zentrallager immer weiter erhöht wird, werden im Stand der Technik verschiedene Kommissionieranlagen und Kommissionierverfahren vorgeschlagen.

In der WO 03/010074 A1 wird ein Verfahren und eine System zum Bedienen eines Regals in einer Kommissionieranlage vorgeschlagen. Das System weist ein Regal und ein zugeordnetes Regalbediengerät zum Aus- und Einlagern von Behältern, Tabletts oder dergleichen aus dem bzw. in das Regal auf. Ein Regal dort besteht aus mehreren übereinander angeordneten Regalbereichen, die jeweils eine Vielzahl von Regalebenen aufweisen. Jedem Regalbereich ist ein höhen- und längsverstellbares Regalbediengerät zugeordnet, das an den Regalbereich mechanisch angekoppelt ist. An einer Stirnseite des Regals wird dann für jeden Regalbereich eine niveaugleiche Pufferzone zur Übergabe von Behältern vorgesehen. Die Pufferzone befindet sich immer auf dem gleichen Niveau relativ zum Regalbereich. Ferner ist an der Stirnseite des Regals zumindest ein vertikal verfahrbarer Lift vorgesehen, der die Behälter aus den Pufferzonen abholt und sie an eine meist bodenseitig angeordnete Fördertechnik zu weiteren Kommissionierung abgibt.

Ein Problem bei diesem Ansatz ist, dass der komplette Warenstrom zum Ein- und Auslagern von Behältern in das Regal über den stirnseitig angeordneten vertikalen Lift erfolgt, so dass der Durchsatz relativ gering ist, insbesondere zu Zeiten, in denen viele Behälter ausgelagert und gleichzeitig und/oder zusätzlich eingelagert werden müssen. Stirnseitige Lifte stellen einen "Flaschenhals" dar.

Gemäß einem weiteren Ansatz im Stand der Technik, der auch unter dem Begriff "Stollengangkommissionierung" ("tunnel picking") bekannt ist, werden zu kommissionierende Artikel auf beispielsweise Europaletten in Regale eingelagert. Die Einlagerung erfolgt üblicherweise mit einem Regalbediengerät, das entlang einer Längsseite des Regals über die gesamte Höhe und Länge desselben verfahrbar ist. Das Regal besteht dabei üblicherweise aus mehreren Ebenen. Der Raum zwischen zwei Ebenen wird als Gang bezeichnet. Mittig im Gang ist z.B. ein Kommissionierförderband angeordnet. Zu kommissionierende Artikel werden von einer Bedienperson (Kommissionierer) aus dem Regal heraus geholt und auf das Zentralband gelegt. Das Zentralband transportiert zu kommissionierende Artikel zu einer Packstation und anschließend zu einer Versandstation.

Nachteilig bei diesem Konzept ist, dass relativ großräumige Lager benötigt werden, um Regale bereitzustellen, die komplett beladene Europaletten aufnehmen können. Des weiteren ist pro Regalebene eine eigene Fördertechnik (Zentralband) erforderlich, um die Waren zur Pack- bzw. Versandstation transportieren zu können. Eine Kommissionierung erfolgt hier zweistufig, d.h. im Stollengang und an einem entfernt gelegenen Packplatz. Artikel werden im Stollengang entnommen und dann an die entsprechenden Plätze verteilt. Für eine Stollengangkommissionierung ist sehr viel Personal erforderlich. Kommissionierer müssen ― aufgrund des Prinzips "Mann zur Ware" - mitunter sehr lange Wege im Gang zurücklegen, um zur Ware zu gelangen. Das Gesamtsystemsystem ist ungleichmäßig ausgelastet. Eine Sortierung beim Verlassen der Stollengang ist unumgänglich. Die Länge des Stollenlagers ist aus sicherheitstechnischen Gründen (Fluchtwege) auf 35m beschränkt, was eine kleine Anzahl von Stellplätzen bedingt. Eine wegoptimierte Kommissionierung ("Ware zum Mann") ist nahezu unmöglich. Eine Sequenzierung ist äußerst komplex.

Angesichts dieser Situation stellt sich die Aufgabe, ein Kommissionierlager sowie ein entsprechendes Verfahren vorzusehen, mit denen die Leistungsfähigkeit erhöht und der Platzbedarf für das Lager minimiert werden können.

Gemäß einem Aspekt der vorliegenden Erfindung wird ein Regallager zum Kommissionieren von in Ladehilfsmitteln, insbesondere auf Tablaren, gelagerten Waren bzw. Artikeln vorgeschlagen, wobei das Regallager aufweist: zumindest ein Regal mit einer ersten und zweiten Längsseite und zwei Stirnseiten, wobei das Regal zumindest eine Regalebene aufweist, wobei jede Regalebene eine Vielzahl von Regalzeilen aufweist, wobei die Regalzeilen übereinander angeordnet sind und jeweils eine Vielzahl von nebeneinander angeordneten Regalplätzen umfassen; zumindest ein Regalbediengerät pro Regalebene, das zumindest ein Lastaufnahmemittel zum Einlagern und Auslagern von Ladehilfsmitteln in die bzw. aus den Regalplätzen einer Regalebene aufweist, wobei das Regalbediengerät in horizontaler und vertikaler Richtung entlang der ersten Längsseite des Regals verfahrbar ist, um in seiner Regalebene Ladehilfsmittel einzulagern und auszulagern; und mehrere vertikale Lifteinheiten, die an der zweiten Längsseite des Regals angeordnet sind und die ein Lastaufnahmemittel zum Abholen und Abgeben von Ladehilfsmitteln von bzw. an vorbestimmte Regallagerplätze aufweisen.

Vorzugsweise weist das Regallager ferner zumindest einen Arbeitsplatz auf, wobei jedem Arbeitsplatz mindestens eine Lifteinheit zugeordnet ist, wobei jeder Arbeitsplatz insbesondere eine Einrichtung zum Präsentieren eines Ladehilfsmittels aufweist. Eine Verlagerung des vertikalen Lifts von der Stirnseite zur Längsseite des Regals bedingt eine Vielzahl von Vorteilen, insbesondere wenn mehrere Lifteinheiten seitlich angeordnet werden.

Zum Einen können mehrere vertikale Lifteinheiten nebeneinander angeordnet werden, was die Anzahl von möglichen Wechselspielen zwischen Lifteinheiten und Regal erhöht. Im Stand der Technik konnte lediglich ein einziger Lift an der Stirnseite vorgesehen werden, da ein in einer Gasse verfahrbares Regalbediengerät immer nur einen einzigen Übergabepunkt hatte, nämlich das stirnseitige Ende der Gasse. Gemäß der vorliegenden Erfindung findet eine Entkopplung der Übergabe vom Regalbediengerät zur Lifteinheit, und umgekehrt, statt. Erfindungsgemäß werden Ladehilfsmittel, die vom Vertikallift benötigt werden, in vorbestimmten Regalplätzen, den so genannten Transferregalplätzen, "zwischengelagert". Das Regalbediengerät fährt entlang der einen Längsseite und kann somit mehrere Lifteinheiten, die auf der gegenüberliegenden Längsseite des Regals angeordnet sind, mit Ladehilfsmitteln versorgen. Eine zusätzliche Fördertechnik im Bereich der Übergabe zwischen Regalbediengerät und Lift, wie im Stand der Technik gefordert, ist nicht erforderlich. Weist das Regalbediengerät insbesondere mehrere Lastaufnahmemittel auf, die vorzugsweise übereinander und/oder nebeneinander liegend angeordnet sind, können die seitlichen Lifteinheiten gleichzeitig mit mehreren Ladehilfsmitteln versorgt werden. Die Lifteinheit transportiert dann die "zwischengelagerten" Ladehilfsmittel im Wesentlichen in vertikaler Richtung zu einem ihr zugeordneten Arbeitsplatz oder an eine Fördertechnikschleife, die auf dem Regallager angeordnet sein kann. Durch dieses Konzept lässt sich eine größere Dynamik realisieren als im Stand der Technik, wo die Vertikallifte an den Stirnseiten angeordnet waren.

Die Lifteinheiten können auf mehrere Übergabeplätze im Regal zugreifen. Dies ermöglicht eine sequenzierte Bereitstellung von Ladehilfsmitteln am Arbeitsplatz, wie es später noch detaillierter beschrieben werden wird.

Ferner lässt sich mit seitlichen Lifteinheiten ein Wareneinlagerungsprozess, während dem Ladehilfsmittel in das Regal eingelagert werden, von einem Warenauslagerungsprozess entkoppeln, während dem Ladehilfsmittel aus dem Regal ausgelagert werden, um beispielsweise kommissioniert zu werden.

Gemäß einer bevorzugten Ausführungsform ist ein erster und ein zweiter Lift vorgesehen, wobei dem ersten Lift erste Transferregalplätze zugeordnet sind und wobei der erste Lift dazu ausgelegt ist, Ladehilfsmittel aus dem Regal abzuholen und zum Arbeitsplatz zu transportieren, und wobei dem zweiten Lift zweite Transferregalplätze zugeordnet sind und der zweite Lift dazu ausgelegt ist, Ladehilfsmittel an das Regal abzugeben.

Auf diese Weise lässt sich der Vorgang der Wareneinlagerung von dem Vorgang der Warenauslagerung entkoppeln. Für die Wareneinlagerung sowie für die Warenauslagerung kann jeweils ein separater Lift vorgesehen werden, der keine andere Funktion hat.

Ferner ist es von Vorteil, wenn der zweite Lift an eine Wareneingangsförderstrecke gekoppelt ist.

Die Wareneingangsförderstrecke dient zur Versorgung des Regallagers mit Ladehilfsmitteln bzw. Waren, die während Kommissioniervorgängen aus dem Regallager ausgelagert werden.

Vorzugsweise weist die vertikale Lifteinheit mehrere Lastaufnahmemittel auf, die paarweise entlang jeweils eines Gestells vertikal verfahrbar sind und unabhängig voneinander Ladehilfsmittel aufnehmen und/oder abgeben können.

Diese Maßnahme erhöht den Durchsatz von Ladehilfsmitteln, da mehrere Ladehilfsmittel gleichzeitig betätigt werden können.

Ferner ist es von Vorteil, wenn die Lifteinheit den Arbeitsplatz seitlich mit Ladehilfsmitteln versorgt.

Eine seitliche Versorgung des Arbeitsplatzes gewährleistet eine ergonomische Bereitstellung der Ladehilfsmittel. Eine Bedienperson kann auf einfache Weise Artikel, die sich in bzw. auf dem Ladehilfsmittel befinden, herunterschieben.

Vorzugsweise ist dazu eine Kippeinrichtung vorgesehen, die das Ladehilfsmittel in eine Richtung abkippt, in die die Bedienperson die Waren zur weiteren Verarbeitung schiebt. Die Ladehilfsmittel müssen nicht angehoben werden, was ebenfalls ergonomisch von Vorteil ist. Ferner sind vorzugsweise Rollen oder ähnliche Einrichtungen vorgesehen, die eine Umladebewegung unterstützen.

Gemäß einer weiteren bevorzugten Ausführungsform ist der Arbeitsplatz an eine Warenausgangsförderstrecke gekoppelt.

Die Warenausgangsförderstrecke ermöglicht den Transport der zu kommissionierenden Ladehilfsmittel (Waren) selbst zu einem Packplatz, an dem die zu kommissionierenden Artikel bzw. Waren entnommen und gepackt werden.

Insbesondere weist der Arbeitsplatz ferner eine Umladeeinheit auf, wobei die Umladeeinheit, Waren, die auf bzw. in einem präsentierten Ladehilfsmittel enthalten sind, oder Ladehilfsmittel selbst zur weiteren Verarbeitung umlädt.

Wenn die zu kommissionierenden Waren direkt, d.h. ohne Ladehilfsmittel, weiter transportiert werden, spart man eine Fördertechnik für leere Ladehilfsmittel ein. Ähnlich wie die Ladehilfsmittel zum Arbeitsplatz gelangt sind, können sie auch auf umgekehrtem Wege wieder von diesem abtransportiert werden. Dazu werden vorzugsweise die Lifteinheiten und Regalbediengeräte eingesetzt. Dies resultiert in geringeren Kosten, da weniger oder gar keine Fördertechnik benötigt wird.

Insbesondere ist die Umladeeinheit eine Bedienperson oder eine Umlademaschine.

Das hier vorgeschlagene System lässt sich also sowohl manuell als auch maschinell bedienen.

Gemäß einer weiteren Ausführungsform umfasst die Einrichtung zum Präsentieren der Ladehilfsmittel eine Fläche, auf die bzw. von der das Ladehilfsmittel von der Lifteinheit abgegeben bzw. abgeholt wird, wobei die Fläche zum Präsentieren mit Mitteln zum Neigen der Fläche gekoppelt ist.

Die Mittel zum Neigen der Fläche erhöhen wiederum die Ergonomie am Arbeitsplatz, insbesondere wenn Menschen zum Umladen der zu kommissionierenden Waren von den Ladehilfsmitteln auf z.B. eine Fördertechnik oder direkt auf eine Versandpalette eingesetzt werden.

Vorzugsweise weist der Arbeitsplatz ein Gestell nach Art des Regals auf, wobei das Gestell zusätzliche, übereinander angeordnete Regalplätze zum Lagern von insbesondere Ladehilfsmitteln für Schnellläufer aufweist, wobei diese zusätzlichen Regalplätze derart oberhalb und/oder unterhalb der Einrichtung zum Präsentieren der Ladehilfsmittel, die in das Gestell integriert sein kann, angeordnet sind, dass die dem Arbeitsplatz zugeordnete Lifteinheit z.B. die Ladehilfsmittel für Schnellläufer von dort abholen und dorthin abgeben kann.

Diese Maßnahme erhöht wiederum den Durchsatz. Der Raum über der Einrichtung zum Präsentieren der Ladehilfsmittel kann als zusätzlicher Lagerraum genutzt. Er dient somit als Puffer und/oder Speicher. Dieser Speicher wird vorzugsweise für sogenannte A-Artikel freigehalten. Unter einem "A-Artikel" versteht man einen Artikel, der sehr häufig und in großen Stückzahlen bei einer Vielzahl von Kommissionieraufträgen angefordert wird. Durch die Lagerung in direkter Nähe zum Arbeitsplatz bzw. zur Lifteinheit ist eine schnelle Bereitstellung gewährleistet. Die Wege, die diese A-Artikel zurücklegen müssen, sind äußerst kurz, was wiederum die Zeit verkürzt, die zum Bereitstellen dieser Artikel benötigt wird.

Gemäß einer weiteren Ausführungsform sind ein erstes Regal und ein zweites Regal vorgesehen, die entlang der ersten Längsseite gegenüberliegend angeordnet sind, die eine Regaleinheit bilden und die zwischen sich in Längsrichtung jeweils eine Regalgasse definieren, in der die Regalbediengeräte jeder Regalebene verfahrbar sind.

Hier kommt die Modularität des Systems der vorliegenden Erfindung zum Ausdruck. Es können mehrere Regale miteinander kombiniert werden, um größere Regallager zu schaffen. Ein Regalbediengerät kann dann zwei Regale gleichzeitig versorgen, nämlich die Regale, an die es seitlich angrenzt. Dadurch wird die Anzahl der Stellplätze erhöht. Das Regalbediengerät sorgt für den Transfer von Ladehilfsmitteln aus zwei sich horizontal gegenüber liegenden Regalebenen, indem es innerhalb der sich gegenüberliegenden Regalebenen sowohl horizontal als auch vertikal verfahren wird.

Weiterhin ist es von Vorteil, wenn die Lifteinheiten jeweils an äußeren Längsseiten der Regaleinheit angeordnet sind.

Wenn eine Lifteinheit an einer äußeren Längsseite angeordnet ist, kann sie nicht mit einem Regalbediengerät kollidieren, das auf der gegenüberliegenden Seite angeordnet ist. Diese gegenüberliegende Seite bildet bei einer aus zwei Regalen bestehenden Regaleinheit die mittlere, d.h. innere, Regalgasse. Ein separater Anschluss von Wareneingangs- bzw. Warenausgangs-Förderstrecken wird so ermöglicht.

Gemäß einer weiteren bevorzugten Ausführungsform ist jeder Arbeitsplatz im Bereich der Einrichtung zum Präsentieren der Ladehilfsmittel mit einem Sensor, insbesondere mit einem Lichtgitter, zum Erfassen eines Ladehilfsmittelwechsel zwischen Lifteinheit und Arbeitsplatz und/oder zum Erfassen einer Entnahme von Waren oder eines Ladehilfsmittels versehen.

Das Lichtgitter hat hier zwei Funktionen, nämlich eine Überwachung der Sicherheit sowie eine Überwachung des Kommissioniervorgangs selbst. Mit dem Lichtgitter kann erfasst werden, ob eine Kommissionierperson beispielsweise ihre Arme oder Hände noch im Bereich des Ladehilfsmittels hat, um einen Transfer des Ladehilfsmittels zu verhindern, bei dem sich die Bedienperson verletzen könnte. Ferner kann überwacht werden, ob die Bedienperson das Ladehilfsmittel selbst oder Waren aus diesem gemäß dem Kommissionierauftrag entnommen hat. Dadurch reduziert sich die Fehlerrate beim Kommissionieren.

Besonders von Vorteil ist es, wenn das Ladehilfsmittel ein Tablar ist, auf dem Waren sortenrein in Form von vollständigen Palettenschichten gelagert werden.

Insbesondere bei der Kommissionierung für Lebensmittelketten hat sich herausgestellt, dass verschiedene Artikeltypen meist in großer Zahl pro Kommissionierauftrag angefordert werden. Die angeforderten Warentypen werden dann üblicherweise sortenrein auf z.B. Euro-Paletten an das Kommissionierlager geliefert. Diese Euro-Paletten werden erfindungsgemäß schichtweise aufgelöst bzw. depalettiert, wobei jede Palettenschicht auf ein eigenes Tablar umgeladen wird. Der Vereinzelung der Schichten zu einzelnen Artikeln bzw. Wareneinheiten erfolgt nicht. Diese Maßnahme reduziert die Anzahl der für eine Auflösung einer vollständigen Palette erforderlichen Tablare. Somit reduziert sich der Raum, der erforderlich ist, um eine Palette aufzulösen, da bei einer Einzelauflösung schon aufgrund der höheren Anzahl von benötigten Tablaren im Regal mehr Platz benötigt wird, um das identische Warenvolumen unterzubringen.

Die schichtweise Auflösung der Paletten hat den weiteren Vorteil, dass Paletten nicht sofort vollständig aufgelöst werden müssen, sondern nach Entnahme einer Schicht wieder in ein Palettenlager zurückgeführt werden können. Dadurch verringert sich die Anzahl von auf Vorrat vorzuhaltenden Paletten im Palettenlager, da der Transfer der Waren vom Palettenlager in das Regallager "schichtweise" erfolgt, und nicht wie im Stand der Technik vollständige Paletten vereinzelt (aufgelöst) werden.

Gemäß einer weiteren Ausführungsform kann das Lastaufnahmemittel des Regalbediengeräts bis zu vier Ladehilfsmitteln gleichzeitig aufnehmen und unabhängig voneinander ansteuern, und das Lastaufnahmemittel des Lifts kann mehrere Ladehilfsmittel übereinander aufnehmen und unabhängig voneinander ansteuern.

Auch durch diese Maßnahme wird der Durchsatz erhöht bzw. die Zeit verkürzt, die notwendig ist, um Ladehilfsmittel ein- bzw. auszulagern.

Ferner kann es von Vorteil sein, wenn die ersten Transferregalplätze Regalplätze sind, die während eines Kommissioniervorgangs von der ersten Längsseite des Regals durch das Regalbediengerät mit Ladehilfsmitteln beschickt und von der zweiten Längsseite des Regals vom Lift geleert werden, und die während eines Einlagerungsvorgangs von der zweiten Längsseite beschickt und von der ersten Längsseite geleert werden.

Außerdem ist es von Vorteil, wenn jede Regalebene bis zu acht Regalzeilen aufweist.

Die oben erwähnte Aufgabe wird ferner durch ein Kommissioniersystem mit einem Regallager gemäß der oben erläuterten Art gelöst, wobei das Kommissioniersystem ferner aufweist: ein Hochregallager zur Einlagerung schichtweise beladener Paletten; eine Depalettierungseinrichtung zum Depalettieren der Paletten des Hochregallagers; mindestens eine Packstation; und eine Versandstation.

Das erfindungsgemäße Regallager lässt sich in nahezu jedes Kommissioniersystem in Form eines Moduls integrieren. Vorzugsweise wird es zusammen mit einem Hochregallager eingesetzt, das schichtweise beladene Paletten speichert, die anschließend auch schichtweise auf Tablare depalettiert werden, um die so beladenen Tablare in dem Regallager einzulagern.

Ferner ist es von Vorteil, wenn ein Schnelldreher-Lagerbereich vorgesehen ist und insbesondere ein Restwarenlager vorgesehen ist.

Sowohl der Schnelldreher-Lagerbereich als auch das Restwarenlager stellen weitere Module dar, die mit dem Regallager gemäß der Erfindung kombiniert werden können, um eine Kommissionieranlage zu bilden, die einer Vielzahl von Kommissionieranforderungen gewachsen ist.

Insbesondere sind die verschiedenen Komponenten des Kommissioniersystems bzw. der Kommissionieranlage jeweils über eine Fördertechnik aneinander gekoppelt.

Die Fördertechnik transportiert die entsprechenden Transporteinheiten zwischen den Modulen hin und her. Bei den Transporteinheiten kann es sich entweder beladene oder leere Paletten, beladene oder leere Ladehilfsmittel, und Ähnliches handeln.

Gemäß einer weiteren Ausführungsform ist die Packstation in dem Arbeitsplatz des Regallagers integriert.

Auf diese Weise spart man zumindest eine Fördertechnik für den Transport der Waren oder Ladehilfsmittel zu der Packstation ein. Ferner erhöht sich wiederum der Durchsatz des Gesamtsystems, da die zu kommissionierenden Waren nicht mehr zu einer separaten Packstation transportiert werden müssen.

Die oben erwähnte Aufgabe wird ferner durch ein Kommissionierverfahren zum Kommissionieren von einer Vielzahl von verschiedenen Warentypen, die auf oder in Ladehilfsmitteln, insbesondere Tablaren, gelagert sind, gemäß einem Kommissionierauftrag mit folgenden Schritten gelöst: Unterteilen eines Regals eines Regallagers in zumindest eine Regalebene, die jeweils eine Vielzahl von übereinander angeordneten Regalzeilen, die jeweils eine Vielzahl von nebeneinander liegenden Regalplätzen aufweisen und die ein vertikal und horizontal verfahrbares Regalbediengerät umfasst; jedem Warentyp zumindest einen Regalplatz Zuordnen und Einlagern von zumindest allen Warentypen, die für eine Abarbeitung des Kommissionierauftrags erforderlich sind, in die zugeordneten Regalplätze; und Abarbeiten des Kommissionierauftrags; wobei der Schritt des Abarbeitens folgende Schritte aufweist: Ansteuern eines Regalbediengeräts, so dass das Regalbediengerät ein Ladehilfsmittel, das einen zum Kommissionierauftrag gehörigen Warentyp enthält, aus dem zugeordneten Regalplatz auslagert und in ein Transferregalplatz einlagert; Ansteuern einer seitlich zum Regal angeordneten vertikalen Lifteinheit, so dass die Lifteinheit das Ladehilfsmittel vom Transferregalplatz abholt und an einen Arbeitsplatz, wie z.B. eine Einrichtung zum Präsentieren oder direkt auf eine Fördertechnik, abgibt; und Umladen von Waren aus- bzw. von dem Ladehilfsmittel oder des Ladehilfsmittels zum Transport an eine Packstation.

Die wesentlichen Vorteile dieses Verfahrens sind in der Entkopplung des Regalbediengeräts bei der Übergabe der Ladehilfsmittel an die Lifteinheit sowie in der sequenzierten Bereitstellung der Ladehilfsmittel am Arbeitsplatz und der schnelleren Ein- und Auslagerung der Ladehilfsmittel zu sehen. Ferner kann die Einlagerung der Ladehilfsmittel in das Regal von der Auslagerung der Ladehilfsmittel aus dem Regal entkoppelt werden, indem mehrere seitliche Lifteinheiten vorgesehen werden.

Wenn ein Arbeitsplatz von mehreren Lifteinheiten gleichzeitig bedient wird, kann der Durchsatz erhöht werden.

Außerdem können die Lifte der Lifteinheit jeweils über mehrere (z.B. 4) Lastaufnahmemittel zum Abholen und Abgeben von Ladehilfsmitteln verfügen. Auf diese Weise kann eine Leistungserhöhung durch z.B. "4-fach-Spiele" erzielt werden. Vorzugsweise weist das Regalbediengerät mindestens genauso viele Lastaufnahmemittel auf, die z.B. wiederum nebeneinander und/oder übereinander angeordnet sein können. Unter einem "4-fach-Spiel" wird der gleichzeitig Transfer von vier Ladehilfsmitteln verstanden, z.B. zwischen dem Lift und den Transferplätzen oder zwischen dem Regalbediengerät und den Transferplätzen.

Wenn die Packstation direkt in den Arbeitsplatz integriert ist, können Warenverbände (wie z.B. ein Zwölferpack Milchtüten) vom Lift direkt auf die zu kommissionierende Palette ungeladen werden. Während ein erster Lift beispielsweise ein Tablar wieder abtransportiert, kann ein zweiter Lift, der dem gleichen Arbeitsplatz zugeordnet ist, ein neues Ladehilfsmittel zum Arbeitsplatz transportieren.

Gemäß einer bevorzugten Ausführungsform übergibt eine weitere, seitlich angeordnete Lifteinheit Ladehilfsmittel an Lagertransferregalplätze, woraufhin das Regalbediengerät dieses Ladehilfsmittel aus dem Einlagertransferregalplatz auslagert und entweder in einen Regalplatz oder in einen Transferregalplatz einlagert.

In diesem Aspekt der Erfindung äußert sich wiederum die Entkopplung des Regalbediengeräts vom Lift. Das Regalbediengerät muss zur Übergabe eines Ladehilfsmittels nicht auf den Lift warten, sondern übergibt das Ladehilfsmittel an einen Transferplatz. Während das Regalbediengerät Ladehilfsmittel zu Kommissionierzwecken an Transferregalplätze liefert, kann es gleichzeitig, d.h. während der gleichen Horizontalfahrt in der Regalgasse, Ladehilfsmittel von Einlagertransferregalplätzen abholen, um diese abgeholten Ladehilfsmittel auf Regalplätzen einzulagern. Diese beiden Vorgänge stellen zwei Sequenzierungsstufen dar. Eine erste Sequenzierungsstufe spiegelt sich in dem Ort wieder, an den das Regalbediengerät das Ladehilfsmittel einlagert. Je weiter ein solcher Einlagerplatz von einem Transferregalplatz entfernt ist, desto länger ist der Weg und wird es dauern, das entsprechende Ladehilfsmittel zu Kommissionierungszwecken auszulagern. Eine zweite Sequenzierungsstufe spiegelt sich im Einlagerungslift wieder. Über den Einlagerungslift kann der Zeitpunkt gesteuert werden, zu dem ein Ladehilfsmittel eingelagert bzw. dem Regalbediengerät zur Auslagerung bereitgestellt wird.

Vorzugsweise holt der Lift beim Einlagern ein Ladehilfsmittel für Schnellläufer von einem Transferregalplatz ab und gibt dieses Ladehilfsmittel für Schnellläufer an einen zusätzlichen Regalplatz ab, der oberhalb und/oder unterhalb des Arbeitsplatzes vorgesehen ist.

Dadurch verkürzen sich die Wege, um Schnellläufer zum Arbeitsplatz zu transportieren. Für den Transport wird lediglich der Lift, nicht jedoch das Regalbediengerät eingesetzt. Dies resultiert in einer schnelleren Bereitstellung für Schnelldreher, Schnellläufer bzw. A-Artikel.

Insbesondere wird eine Abgabe oder Abholung eines Ladehilfsmittels an den bzw. von dem Arbeitsplatz mit einer Sensoreinheit erfasst, um zu verhindern, dass ein Ladehilfsmitteltransfer zwischen dem Arbeitsplatz und dem Lift stattfindet, während eine Bedienperson im Transferbereich tätig ist, und/oder um Entnahmen von Waren aus bzw. von dem Ladehilfsmittel zu erfassen.

Dies erhöht zum Einen die Betriebssicherheit und zum Anderen die Kommissioniersicherheit. Die Bedienperson wird vor körperlichem Schaden beschützt. Der Kommissioniervorgang wird überwacht. Die Anzahl von Fehlkommissionierungen, insbesondere hinsichtlich der Anzahl der zu kommissionierenden Waren, wird reduziert.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1A-D: zeigen eine Draufsicht auf eine Regaleinheit (Fig. 1A), eine Schnittansicht entlang einer Regalgasse (Fig. 1B), eine Seitenansicht (Fig. 1C) des Regals der Fig. 1A und eine Ansicht einer Stirnseite (Fig. 1D) des Regals der Fig. 1A;
- Fig. 2: eine Seitenansicht auf eine Stirnseite eines Regallagers gemäß der Erfindung;
- Fig. 3: eine perspektivische Ansicht von Arbeitsplätzen;
- Fig. 4: eine perspektivische Ansicht eines Arbeitsplatzes mit integrierter Packstation;
- Fig. 5: eine perspektivische Ansicht mehrerer Regaleinheiten;
- Fig. 6: eine perspektivische Ansicht eines Kommissioniersystems;
- Fig. 7: ein schematisches Blockdiagramm eines weiteren Kommissioniersystems; und
- Fig. 8: eine Draufsicht auf ein weiteres Kommissioniersystem zur Veranschaulichung eines Wareneingangs und eines Warenausgangs.

In den nachfolgenden Figuren werden ähnliche Merkmale mit den gleichen Bezugsziffern bezeichnet werden.

Unter einem Ladehilfsmittel wird nachfolgend ein Behälter, ein Tablar oder eine ähnliche Einrichtung zum Lagern von Waren und Artikeln in einem Warenlager verstanden werden. In einem Behälterkommissioniersystem gibt es u.a. Lagerbehälter und Auftragsbehälter. In einem Lagerbehälter werden Waren bzw. Artikel gelagert, die gemäß einem Kommissionierauftrag zu kommissionieren sind. Ein Kommissionierauftrag stellt eine Art Auftragsliste verschiedener Artikel dar, die kommissioniert werden müssen. Die angeforderten Artikel können in Anzahl und Typ stark variieren. Die zu einem Kommissionierauftrag gehörenden Artikel werden dann in einen Auftragsbehälter kommissioniert.

Im Lebensmittelbereich werden die zu kommissionierenden Artikel üblicherweise (verbundweise) auf Paletten oder Rollcontainer gestapelt, um anschließend an eine Filiale ausgeliefert zu werden. Bei den Paletten kann es sich um die sogenannten Euro-Paletten mit einer Abmessung von 1200 mm x 600 mm oder um Düsseldorfer Paletten mit einer Abmessung von 600 mm x 800 mm handeln. Mit der vorliegenden Erfindung können jedoch beliebige Behälter-, Tablar- und Palettenabmessung gehandhabt werden.

Unter einem Regalbediengerät (RBG) wird nachfolgend eine Vorrichtung verstanden, die sowohl vertikal als auch horizontal entlang eines Regals verfahrbar ist. Dazu kann das RBG ein Fahrzeugchassis inklusive Antrieb aufweisen, um es entlang einer Regalgasse (horizontal) zu verfahren. Ferner kann ein RBG einen Mast umfassen, entlang dem ein Hubwagen inklusive Lastaufnahmemittel (LAM) mittels eines Hubwerks (gleichzeitig) vertikal verfahrbar ist. Das LAM dient zur Aufnahme und/oder Abgabe von Ladehilfsmitteln, wie z.B. Tablaren. Unter einer Regalgasse wird nachfolgend der Raum zwischen zwei einander gegenüberliegenden Regallängsseiten verstanden werden.

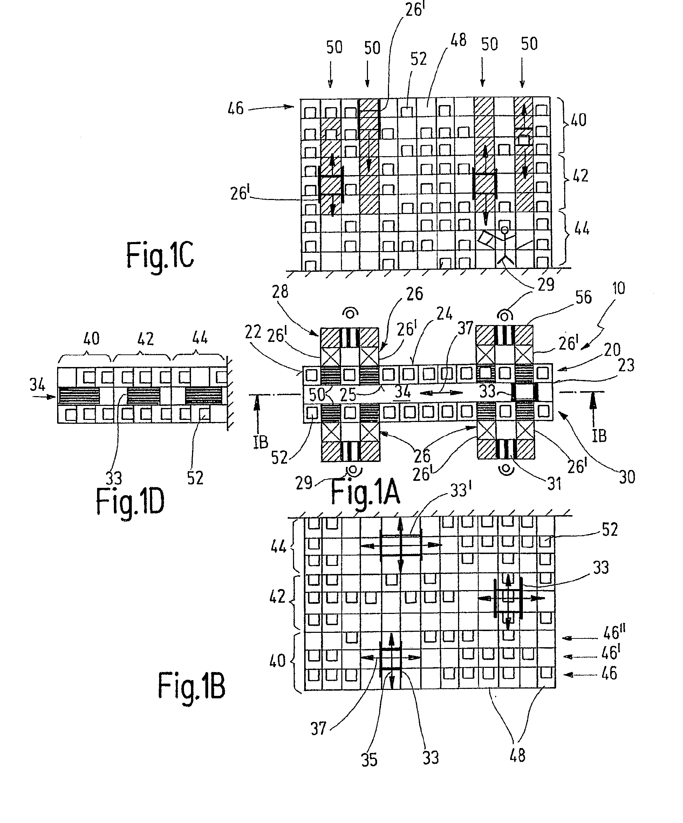

Fig. 1A zeigt eine schematisierte Draufsicht auf eine Regallager 10 gemäß der vorliegenden Erfindung.

Das Regallager 10 der vorliegenden Erfindung weist hier zwei Regale 20, 30 auf. Die beiden Regale 20 und 30 bilden eine Regaleinheit. Jedes der Regale 20, 30 weist zwei Längsseiten 24, 25 und zwei Stirnseiten 22 und 23 auf. Sich gegenüberliegende Längsseiten der Regale 20, 30 werden nachfolgend als erste Längsseiten bezeichnet werden. Es versteht sich, dass eine Regaleinheit u.a. auch ein Doppelregal umfasst, welches von zwei Einzelregalen sandwichartig umgeben ist.

Entlang der zweiten Längsseite 24 der Regale 20, 30 sind jeweils zwei Lifteinheiten 26 vorgesehen. Man beachte, dass die Lifteinheiten 26 hier an den Längsseiten, und nicht wie im Stand der Technik üblich entlang der Stirnseiten, am Regal angeordnet sind. Den Lifteinheiten 26 gegenüberliegend sind Arbeitsplätze 28 vorgesehen, die z.B. von Bedienpersonen bzw. Kommissionierern 29 bedient werden. Die Arbeitsplätze 28 grenzen an die Lifteinheiten an. In der Fig. 1A sind insgesamt vier Arbeitsplätze 28 und vier Kommissionierer 29 gezeigt. Die Kommissionierer 29 kommissionieren und packen hier direkt auf Paletten 31. Hier ist das Kommisionierprinzip "Ware zum Mann" realisiert. Die Kommissionierer könnten jedoch auch z.B. auf eine Fördertechnik (hier nicht dargestellt) kommissionieren.

Zwischen den beiden ersten Längsseiten 25 der Regale 20 und 30 ist eine Regalgasse 34 ausgebildet, in der sich ein RBG 33 bewegen kann. Das RBG 33 ist vorzugsweise mechanisch an die Regalfront(en) gekoppelt.

Fig. 1B zeigt eine Schnittansicht entlang der Linie IB)-IB) der Fig. 1A. In Fig. 1B blickt man auf die erste Längsseite 25 des Regals 30.

In Fig. 1B ist zu erkennen, dass die Regale in eine Vielzahl von Regalebenen 40-44 unterteilt sind. Die Regalebenen 40-44 sind hier vertikal übereinander angeordnet. Jede Regalebene 40-44 kann aus einer Vielzahl von Regalzeilen 46, 46', 46" bestehen. Die Regalzeilen 46, 46' und 46" sind hier vertikal übereinander angeordnet. Jeder Regalebene 40-44 ist jeweils ein RBG 33 zugeordnet. Das RBG 33 lässt sich sowohl in vertikaler Richtung 35 als auch in horizontaler Richtung 37 bewegen. Das RBG 33 ist dazu mechanisch an zumindest eines der Regale 20, 30 gekoppelt. Vorzugsweise verfügt es über einen eigenen Antrieb (nicht dargestellt), um gleichzeitig entlang der vertikalen Richtung 35 und der horizontalen Richtung 37 verfahren zu werden. Ferner verfügt das RBG 33 über ein oder mehrere LAM. Die in Fig. 1B in den Regalebenen 40 und 42 gezeigten RBG 33 verfügen jeweils über zwei LAM. Das RBG 33' der Regalebene 44 verfügt über insgesamt vier LAM, da das RBG 33 doppelt so breit ist, wie die RBG 33 der Regalebenen 40 und 42.

Bezugnehmend auf Fig. 1C ist eine Seitenansicht auf die Längsseite 24 des Regals 20 der Fig. 1A schematisch dargestellt.

In Fig. 1C ist wiederum die Vielzahl der Regalebenen 40-44 zu erkennen. Jede Regalebene 40-44 verfügt über mehrere Regalzeilen 46. Die Regalzeilen 46 umfassen mehrere horizontal nebeneinanderliegende Regalplätze 48.

In den Regalen 20, 30 gibt es besondere Regalplätze 48, die sogenannten Transferregalplätze 50. In der Fig. 1A sind die Transferregalplätze 50 dunkel schraffiert dargestellt und liegen den Liften 26' der Lifteinheiten 26 gegenüber. Es versteht sich, dass je nach Ausgestaltung der Lifteinheiten 26 und der RBG 33, was deren LAM betrifft, auch mehrere Transferplätze direkt nebeneinander angeordnet sein können. Die in Fig. 1A gezeigten Lifteinheiten 26 weisen jeweils zwei Lifte 26' auf, die in Längsrichtung um einen Regalplatz zueinander beabstandet sind. Die Lifte 26' sind ebenfalls in vertikaler Richtung 35 verfahrbar und verfügen hier über ein oder mehrere LAM, die hier (nur) übereinander angeordnet sind. Mit Hilfe der LAM können die Lifte 26' der Lifteinheiten 26 Ladehilfsmittel 52 aus den Transferregalplätzen 50 abholen oder an diese abgeben. Die Transferregalplätze 50 sind, wie bereits oben erwähnt, in der Fig. 1A dunkel schraffiert dargestellt und in der Fig. 1C aus Gründen der Übersichtlichkeit nicht hervorgehoben dargestellt.

Ein Arbeitsplatz 28 umfasst einen Bereich, in dem z.B. ein Kommissionierer 29 arbeitet, d.h. Verpackungseinheiten von einem Tablar nimmt und an einen anderen Ort gibt, und der an die Lifteinheit 26 angrenzt. Am Arbeitsplatz 28 werden Artikel entweder direkt aus dem Lift entnommen und an eine Fördertechnik abgegeben oder direkt auf einen Versandträger gepackt, oder von einer Einrichtung zum Präsentieren empfangen, die einen Teil des Arbeitsplatzes darstellt und vorzugsweise direkt an die Lifte der Lifteinheit angrenzt. Ladehilfsmittel können zwischen Lifteinheit und Präsentiereinrichtung ausgetauscht werden. Anschließend kann eine manuelle Umladung (auf einen Versandträger oder eine Fördertechnik) erfolgen, wie oben erwähnt. Es versteht sich, dass dieses Transferieren auch maschinell erfolgen kann.

Der Kommissionierer 29 der Fig. 1 arbeitet in einem Bereich, der hier (in Draufsicht) eine ungefähre Größe von ca. 3 Regalplätzen 48 hat. Drei Regalplätze umfasst auch der Arbeitsplatz, der die Lifte 26' der Lifteinheit 26 und den hier dazwischenliegenden Packplatz umfasst. Die Lifte 26' holen Ladehilfsmittel aus den Transferregalplätzen 50 der verschiedenen Regalebenen 40-44 ab und transportieren ein abgeholtes Ladehilfsmittel 52 in vertikaler Richtung 35 auf ein Niveau, auf dem der Arbeitsplatz 28 angesiedelt ist. In der Fig. 1 sind die Arbeitsplätze 28 auf der untersten Regalebene 44 angeordnet. Es versteht sich, dass die Arbeitsplätze 28 auf jeder beliebigen Ebene 40 bis 44 angeordnet sein könnten. Auch könnten mehrere Arbeitsplätze übereinander angeordnet werden. Sobald der Lift 26' den Arbeitsplatz 28 erreicht hat, übergibt das LAM des Lifts 26' das aus dem Transferregalplatz 50 abgeholte Ladehilfsmittel 52 an eine Einrichtung zum Präsentieren (Präsentierer) des Ladehilfsmittels, die in der Fig. 1C im rechten Arbeitsplatz 28 durch schräggestellte Linien schematisch angedeutet ist. Die Einrichtung zum Präsentieren von Ladehilfsmitteln wird nachfolgend noch genauer erläutert werden.

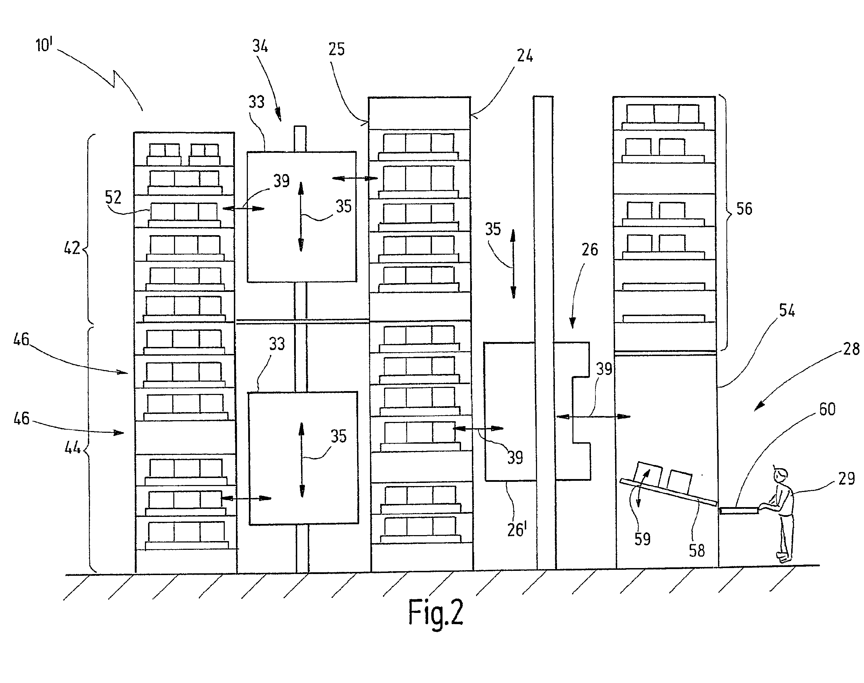

Oberhalb des Arbeitsplatz 28 sind zusätzliche Regalplätze 56 vorgesehen. Die zusätzlichen Regalplätze 56 sind in den Fig. 1A und 1C schräg schraffiert dargestellt. Die zusätzlichen Lagerplätze 56 sind vorzugsweise in einem Bereich angeordnet, der den Liften 26' sowie den Transferregalplätzen 50 gegenüberliegt. Die zusätzlichen Regalplätze 56 dienen vorzugsweise zur Lagerung von sogenannten Schnellläufern. Unter einem "Schnellläufer" ist hier ein Ladehilfsmittel zu verstehen, in dem bzw. auf dem Waren gelagert sind, die bei der Abarbeitung von Kommissionieraufträgen sehr häufig gebraucht werden. Diese Waren- bzw. Artikeltypen werden in Fachkreisen auch mit dem Begriff "A-Artikel" oder "Schnelldreher" bezeichnet. Um die zusätzlichen Regalplätze 56 bereitzustellen, ist der Arbeitsplatz 28 vorzugsweise nach Art des Regals 20 bzw. 30 ausgebildet, d.h. er weist ein Gestell 54 auf, wie es nachfolgend in Fig. 2 näher gezeigt ist. Das Gestell kann regalartig ausgebildet sein und den Präsentierer integriert haben.

Fig. 1D zeigt eine Seitenansicht auf eine Stirnseite der Regaleinheit 10 der Fig. 1A, wobei die seitlichen Lifte 26' aus Gründen der Vereinfachung weggelassen wurden.

Bezugnehmend auf Fig. 2 ist eine schematische Ansicht auf eine Stirnseite eines weiteren Regallagers 10' gemäß der vorliegenden Erfindung gezeigt.

In der linken Hälfte der Fig. 2 sind zwei Regale veranschaulicht, die jeweils in zwei Regalebenen 42 und 44 unterteilt sind. Zwischen den Regalen ist pro Regalebene ein RBG 33 angeordnet, das sowohl in horizontaler (d.h. senkrecht zur Zeichnungsebene) als auch in vertikaler Richtung innerhalb einer Regalgasse 34 verfahrbar ist. Die Regalebenen 42 und 44 bestehen aus einer Vielzahl von Regalzeilen 46, vorzugsweise aus sechs bis acht Regalzeilen 46. In den Regalzeilen 46 werden vorzugsweise Tablare 52 gelagert, die wiederum Palettenlagen, und insbesondere vollständige Palettenlagen, umfassen. An der zweiten Längsseite 24 ist eine Lifteinheit 26 angeordnet. Die Lifteinheit 26 weist hier zwei Lifte 26' (zweiter Lift 26' nicht dargestellt) auf, die in vertikaler Richtung 35 verfahrbar sind, in horizontaler Richtung benachbart zueinander stehen und die jeweils über mindestens ein LAM verfügen, mit dem ein Ladehilfsmittel 52, wie z.B. ein Tablar, in transversaler Richtung 39 abgeholt bzw. abgegeben werden kann. Die Lifte 26' fördern im Wesentlichen in vertikaler Richtung 35. Die RBGs 33 fördern hauptsächlich in horizontaler Richtung 37 (vergleiche Fig. 1B). Die RBG 33 sind jedoch innerhalb ihrer Regalebene ebenfalls in vertikaler Richtung 35 verfahrbar, um alle Regalzeilen 46 ihrer Regalebene 42, 44 erreichen zu können.

In der rechten Hälfte der Fig. 2 ist wiederum ein Arbeitsplatz 28 gezeigt, an dem hier ein Kommissionierer 29 arbeitet. Der Arbeitsplatz 28 kann aus einem Gestell 54 nach Art des Regals aufgebaut sein. An den (aus der Perspektive des Kommissionierers 29) seitlichen Rändern des Arbeitsbereichs 28 ist jeweils eine Einrichtung 58 zum Präsentieren der Ladehilfsmittel vorgesehen. Zwischen diesen Einrichtungen 58 und den Kommissionierer 29 kann eine Fördertechnik 60, wie z.B. ein Bandförderer, vorgesehen sein, um auf den Ladehilfsmitteln gelagerte Artikel oder Artikel auf Ladehilfsmitteln direkt zu einer hier nicht dargestellten Packstation zu befördern. Die Einrichtung 58 kann insbesondere zum Kommissionierer hin geneigt werden. (vgl. Pfeil 59). Der Arbeitsplatz 28 kann ferner eine Bedienerführung (Pick-by-light, Pick-by-voice, optische Anzeigen und Lichter) aufweisen, um dem Kommissionierer 29 die nächste zu erledigende Aktion anzuzeigen (Anzahl, welcher Lift, etc). Auf diese Weise lässt sich der Kommissioniervorgang sicher steuern. Es kommt zu weniger Kommissionierfehlern.

Ferner kann ein Mechanismus (nicht dargestellt) in das Gestell 54 integriert sein (z.B. ein handbetätigter Rechen oder Schieber), mit dem die Artikel/Ladehilfsmittel zum Kommissionierer hin bewegt werden können. Dies erhöht die Ergonomie, da sich der Kommissionierer nicht strecken muss, um Artikel greifen zu können, die weiter weg sind.

Vorzugsweise sind auch Lichtgitter an geeigneten Stellen vorgesehen. So lässt sich der Kommissioniervorgang überwachen (Arbeitssicherheit, Kommissionierbestätigung, etc).

Oberhalb des Arbeitsplatzes 28 können zusätzliche Lagerplätze 56 (Stellplätze) nach Art des Regals vorgesehen sein.

Anhand des Regallagers 10' der Fig. 2 soll nachfolgend ein Kommissioniervorgang beschrieben werden.

Ein in den Figuren nicht dargestellter Lagerverwaltungsrechner erstellt zu jedem Kommissionierauftrag eine Abfolge von Befehlen, mit dem alle Elemente einer Kommissionieranlage, insbesondere des Regallagers 10', angesteuert werden, um alle Artikel abzuarbeiten, die zu dem Kommissionierauftrag gehören. Sobald der Regalplatz eines zu kommissionierenden Artikels bestimmt ist, wird das RBG 33 der entsprechenden Regalebene entlang des Regals in horizontaler Richtung 37 und gegebenenfalls gleichzeitig in vertikaler Richtung 35 verfahren, um das LAM des RBGs 33 direkt vor dem entsprechenden Regalplatz zu positionieren. Anschließend wird dann ein Ladehilfsmittel aus dem entsprechenden Regalplatz mit Hilfe des LAM des RBGs 33 ausgelagert. Dazu weist das LAM vorzugsweise einen Greifmechanismus auf, der an der Vorderseite des Ladehilfsmittels angreift, dieses ein wenig anheben kann und aus dem Regalplatz herauszieht (Manipulation).

Anschließend wird das RBG 33 zu den Transferregalplätzen 50 (vergleiche Fig. 1A) verfahren, um das ausgelagerte Ladehilfsmittel an einen entsprechenden Transferregalplatz 50 abzugeben bzw. dort "einzulagern". Ein entsprechender Lift 26' holt dann dieses Ladehilfsmittel aus dem entsprechenden Transferregalplatz ab, indem das LAM des Lifts 26' beispielsweise unter das Ladehilfsmittel greift und dieses in den Bereich des Lifts 26 zieht. Anschließend wird der Lift 26' in vertikaler Richtung 35 zum Arbeitsplatz 28 verfahren. Am Arbeitsplatz 28 angekommen, gibt das LAM des Lifts 26' das Ladehilfsmittel an die Einrichtung 58 zum Präsentieren des Ladehilfsmittels in transversaler (horizontaler) Richtung (senkrecht zur Längsseite 24 des Regals) ab. Die Einrichtung 58 zum Präsentieren des Ladehilfsmittels ist vorzugsweise mit Mitteln 59 zum Neigen des Ladehilfsmittels versehen. Die Einrichtung 58 zum Präsentieren des Ladehilfsmittels kann dann in Richtung des Kommissionierers 29 geneigt werden, so dass dieser auf dem Ladehilfsmittel befindliche Artikel oder das Ladehilfsmittel selbst einfach auf das Förderband 60 ziehen kann. Ein Neigen ist jedoch nicht zwingend erforderlich. Je nachdem, ob die Artikel einfach-, zweifach-oder dreifachtief auf dem Ladehilfsmittel gelagert sind, kann am Arbeitsplatz 28 optional ein Mechanismus vorgesehen sein (nicht dargestellt), mit dem Artikel, die vom Kommissionierer 29 räumlich weit entfernt sind, zu dem Kommissionierer 29 hin bewegt werden können. Der Kommissionierer muss sich nicht strecken, was ergonomisch ungünstig wäre. Ein solcher Mechanismus könnte beispielsweise durch eine Art Rechen realisiert sein, der im oberen Bereich des Arbeitsplatzes 28 gelenkig gelagert ist, wobei ein entsprechender Betätigungsgriff im Bereich des Kommissionierers 29 angeordnet ist.

Soll z.B. ein sogenannter Schnellläufer kommissioniert werden, ist der Einsatz der RBG 33 nicht zwingend erforderlich, vorausgesetzt die Schnellläufer sind auf Ladehilfsmitteln im Bereich der zusätzlichen Lagerplätze 56 gelagert. In diesem Fall wird lediglich der entsprechende Lift 26' zu dem entsprechenden zusätzlichen Lagerplatz 56 bewegt, d.h. in vertikaler Richtung 35 dorthin verfahren. Anschließend wird das Ladehilfsmittel aus dem entsprechenden zusätzlichen Lagerplatz geholt und an die Einrichtung 58 zum Präsentieren des Ladehilfsmittels am Arbeitsplatz 28 abgegeben, so dass der Kommissionierer 29 schnell mit dem entsprechenden Artikel versorgt wird. Dabei ist festzustellen, dass das RBG 33 überhaupt nicht bewegt werden muss, was in einer erheblichen Zeiteinsparung resultiert.

Außerdem ist bei dieser Kommissionierweise festzustellen, dass es zu einer Entkopplung zwischen den RBG 33 in den Regalgassen 34 und den vertikalen Lifteinheiten 26 kommt, indem der Lift seitlich zu den Regalen angeordnet wird. Im Gegensatz zu den im Stand der Technik vorgeschlagenen Ansätzen, bei denen die Vertikallifte im Stirnbereich der Regale angeordnet werden, können gemäß der vorliegenden Erfindung mehrere vertikale Liften nebeneinander entlang der Längsseite der Regale angeordnet werden. Dadurch erhöht sich zum Einen die Anzahl der zur Verfügung stehenden Transferregalplätze (Puffer). Zum Anderen kommt es zu einer Entkopplung zwischen dem Regalbediengerät, welches hauptsächlich die horizontale Bewegung innerhalb einer Regalgasse vollführt, und dem Lift, der die Vertikalbewegung vollführt.

Dieses Konzept macht sich insbesondere bei der Einlagerung von Waren bzw. Ladehilfsmitteln in das Regal bezahlt.

Vorzugsweise wird in diesem Fall eine weiterer Lifteinheit vorgesehen, die lediglich zur Einlagerung der Ladehilfsmittel in die Regale vorgesehen ist. Wann immer ein RBG 33 einen entsprechenden Einlagerungstransferregalplatz passiert, nimmt es ein entsprechendes, einzulagerndes Ladehilfsmittel mit zu einem Lagerregalplatz oder zu einem Lift, der zur Auslagerung bestimmt ist. Im Stand der Technik erfolgt die Einlagerung wiederum nur über die Vertikallifte an den Stirnseiten, was zu erheblichen Verzögerungen bzw. Komplikationen beim Einlagern von Artikel in die Regale geführt hat.

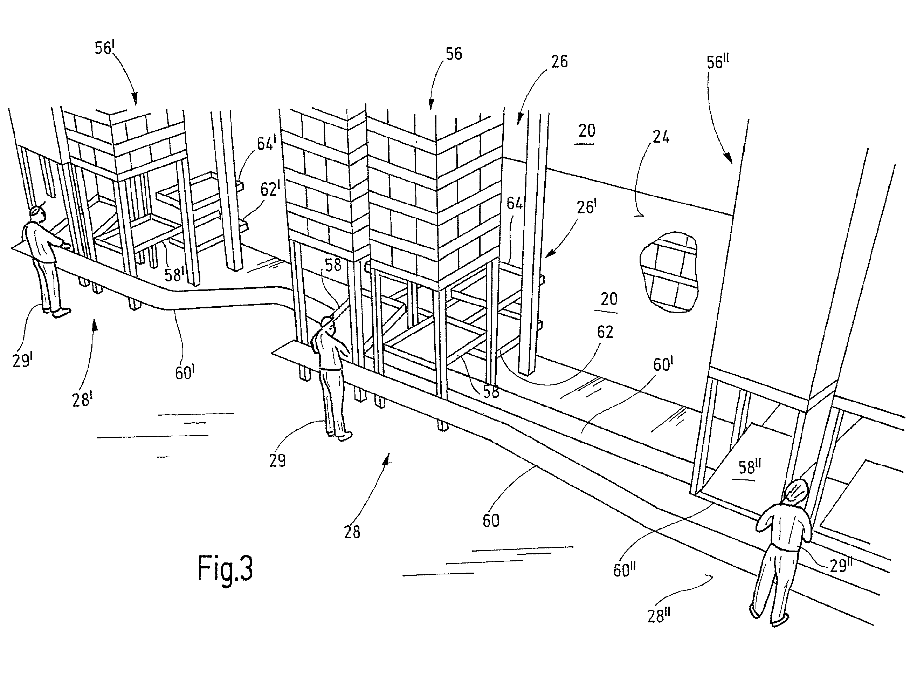

Bezugnehmend auf Fig. 3 sind mehrere Arbeitsplätze 28, 28' und 28" schematisiert dargestellt.

Die parallele Anordnung mehrerer Arbeitsplätze entlang der Längsseite 24 eines Regals 20 hat große Vorteile, was die Ein- und Auslagerung von zu kommissionierenden Artikeln in das Regallager betrifft. Mehrere parallele Arbeitsplätze (inkl. Lifteinheiten) erhöhen auch die Anzahl von Sequenzierungsmöglichkeiten (Stufen), da Waren z.B. gleichzeitig an den mehreren Arbeitsplätzen aus dem Regal ausgelagert werden können, um anschließend zusammengeführt zu werden ("paralleles Kommissionieren").

Dazu ist es erforderlich, dass jeder Arbeitsplatz 28, 28' und 28" vorzugsweise über eine eigene Fördertechnik 60, 60' bzw. 60" verfügt. Vorzugsweise weist jeder Lift 26' der Lifteinheiten 26 zumindest zwei LAM 62 und 64, 62' und 64' bzw. 62" und 64" (nicht dargestellt) auf. Auf diese Weise kann die Anzahl der Wechselspiele zwischen Lagerregal und Lift erhöht werden.

Das LAM 62 bzw. 64 des ersten Arbeitsplatzes 28 gibt (hier nicht dargestellte) Ladehilfsmittel an die Einrichtung 58 zum Präsentieren der Ladehilfsmittel ab. Diese Einrichtung 58 wird zum Kommissionierer 29 geneigt, so dass dieser auf ergonomisch einfache Weise ganze Ladehilfsmittel oder nur, auf dem Ladehilfsmittel befindliche, Artikel auf das Förderband 60 umladen kann.

Dadurch, dass die Lifteinheiten 26 der Fig. 3 jeweils zwei voneinander unabhängig ansteuerbare Lifte 26' aufweisen, kann der Arbeitsplatz 28 nahezu permanent mit zu kommissionierenden Ladehilfsmitteln bzw. Artikeln versorgt werden. Während z.B. einer der Lifte ein Ladehilfsmittel aus einem Transferplatz abholt, gibt der andere Lift ein bereits abgeholtes Ladehilfsmittel an die Einrichtung 58 ab.

Mit Hilfe der Fördertechniken 60, 60' und 60", die vorzugsweise jeweils durch eine Vielzahl von hintereinander angeordneten Förderbändern realisiert sind, kann ein einziger Kommissionierauftrag, der an mehreren Arbeitsplätzen simultan, d.h. parallel, abgearbeitet wurde, synchronisiert werden. Dies bedeutet, das Förderbänder mit kurzen Weg zu einer Packstation "langsamer" betrieben werden können als Förderbänder mit weiterem Weg. "Langsamer" bedeutet z.B., dass auf den Förderbändern befindliche Artikel länger gestaut bzw. angehalten werden können.

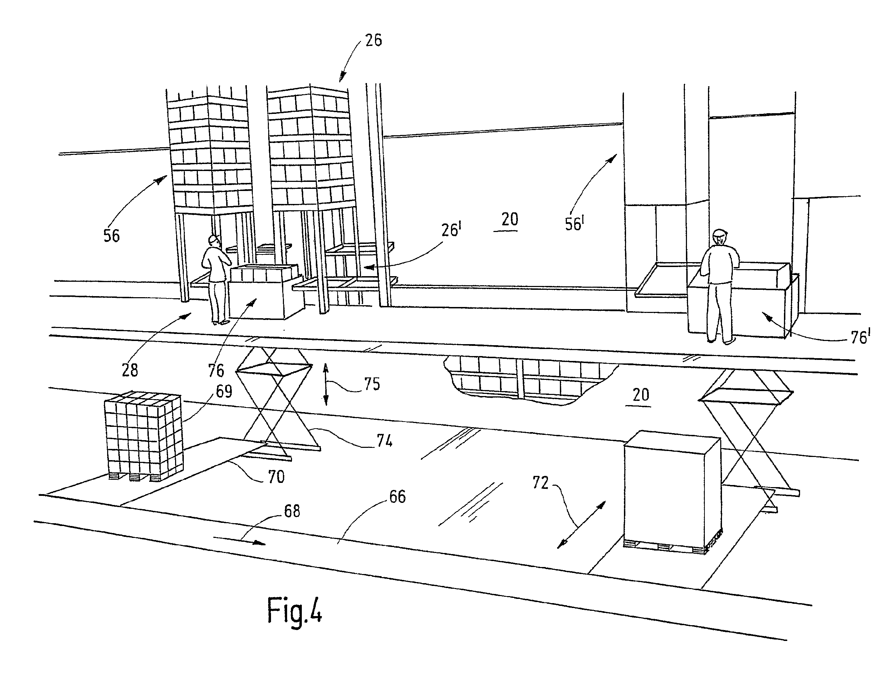

In Fig. 4 ist ein gegenüber der Fig. 3 leicht abgewandelter Arbeitsplatz 28 gezeigt.

Beim Arbeitsplatz 28 der Fig. 4 werden die Artikel nicht auf eine Fördertechnik 60 (vergleiche Fig. 3) umgeladen, sondern direkt, beispielsweise auf eine Palette, gepackt. Ein so ausgebildeter Arbeitsplatz ist detailliert in der deutschen Patentanmeldung mit dem Titel "Regal-intergrierte Packstation und Kommissionierverfahren" beschrieben, die von der Anmelderin der vorliegenden Erfindung am gleichen Tag wie die vorliegende Anmeldung beim DPMA eingereicht wurde. Der Inhalt dieser Anmeldung ist durch Bezugnahme hier integriert.

Der Arbeitsplatz 28 der Fig. 4 ist hier im Bereich einer zweiten Regalebene 42, d.h. eine Regalebene über Boden, angeordnet. Im Bereich einer untersten Regalebene 44 ist eine Fördertechnik 66 vorgesehen, die in einer Hauptförderrichtung 68 fördert. An die Fördertechnik 66 sind Anschlussfördertechniken 70 angekoppelt, mit denen z.B. vollbepackte Euro-Paletten 69 von oder zur (Haupt-)Förderstrecke 66 transportiert werden können. Die Förderstrecke 66 dient somit nicht nur zum Abtransport vollständig beladener Paletten 69, sondern kann auch zum Anliefern von leeren Paletten (nicht gezeigt) verwendet werden. Deshalb kann die Förderstrecke 70 in beiden Richtungen betrieben werden, wie es durch einen Doppelpfeil 72 angedeutet ist.

An das der Hauptförderstrecke 66 gegenüberliegende Ende der Fördertechnik 70 schließt sich eine Hubeinrichtung 74 an, die in einer Hubrichtung 75 betätigbar ist, wie es durch einen Doppelpfeil angedeutet ist. Mit Hilfe der Hubeinrichtung 74 werden leere Paletten auf das Niveau des Arbeitsplatzes 28 angehoben. Im Bereich des Arbeitsplatzes 28 ist vorzugsweise ein Stapelrahmen 76 vorgesehen. Der Stapelrahmen 76 dient zur Vereinfachung eines Packvorgangs. Der Kommissionierer 29 bekommt über die Lifte 26' zu kommissionierende Artikel zum Arbeitsplatz 28 geliefert. Die Artikel werden vorzugsweise anschließend durch die Einrichtung 58 zum Arbeitsplatz hin geneigt. Vorzugsweise neigen sich die Einrichtungen 58 zum Präsentieren der Ladehilfsmittel in Richtung der Stapelhilfe 76, die in Fig. 4 in Form eines rechtwinkligen Rahmens realisiert ist. Die Neigung zur Stapelhilfe 76 hin ist ergonomisch günstig und erleichtert somit den Packvorgang.

Sobald der Kommissionierer 29 eine Palettenschicht im Rahmen 76 gestapelt hat, wird die Hubeinrichtung 74 um eine vorbestimmte Höhe abgesenkt, die annähernd einer Höhe der gestapelten Schicht entspricht. Dies kann mittels eines an geeignetem Ort installierten Lichtgitter erfasst werden. Diese Absenkung kann automatisiert - aber auch manuell durch den Kommissionierer 29 - initiiert werden. Um zu verhindern, dass bereits gestapelte, abgesenkte Warenschichten auf der Packpalette verrutschen, oder schlimmstenfalls sogar von der Palette herunterrutschen, ist vorzugsweise unterhalb der Stapelhilfe 76 eine Wickelmaschine (nicht dargestellt) vorgesehen, die den Stapel umfänglich z.B. mit einer Folie umhüllt, während die Wickelmaschine den Stapel umfährt.

Leere Paletten können optional auch in den zusätzlichen Lagerplätzen 56 gelagert werden. Durch diese Maßnahme kann ein Leerpalettenlager sowie eine Fördertechnik zum Transportieren der Leerpaletten zu den Arbeitsplätzen 28 eingespart werden.

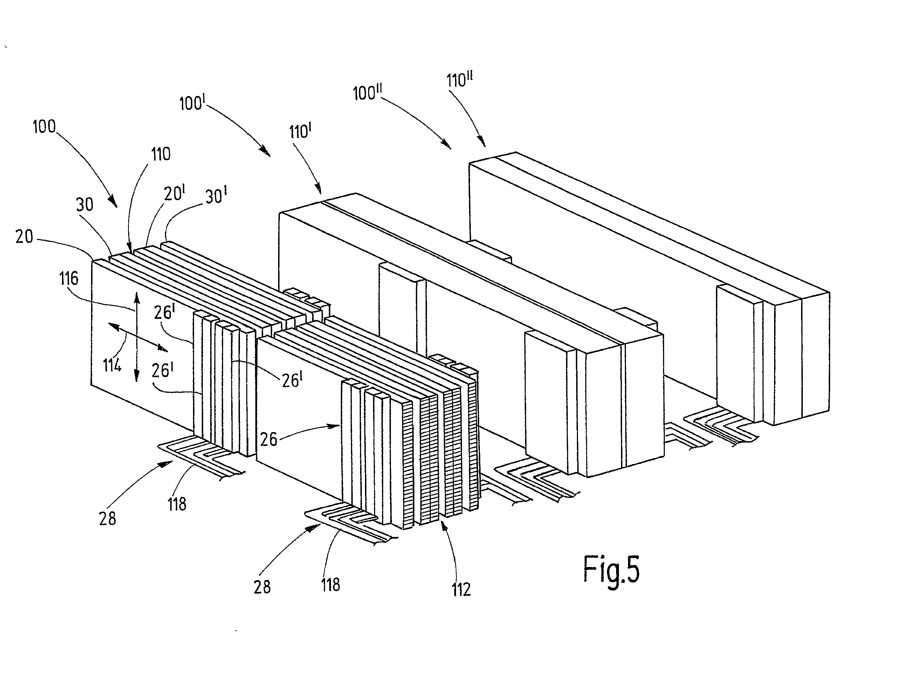

Bezugnehmend auf Fig. 5 sind mehrere Regaleinheiten 100, 100', 100" gezeigt, die jeweils mit einem so genannten automatisierten Kleinteillager ("AKL") kombiniert sind.

In einem AKL, welches voll automatisch gesteuert sein kann, wird nach dem Prinzip "Ware zum Mann" gearbeitet. Ganze Lagereinheiten voller Kleinteile können mechanisch über eine EDV gesteuert werden. Unbemannte automatische Regalförderzeuge (RFZ) entnehmen die Ware von einem Lagerplatz und stellen sie einem Kommissionierplatz oder einer Förderstreckenanbindung zur Verfügung. Die eingesetzten RFZs werden je nach Bedarf mit Einheiten für Unterfahrtechnik, Ziehtechnik oder Greiftechnik bestückt.

Ein solches AKL kann in ein Regallager bzw. einer Regaleinheit gemäß der vorliegenden Erfindung integriert werden. In Fig. 5 sind drei dieser Kombinationen gezeigt. Das AKL 110, welches zwei benachbarte Regale aufweist, ist dabei mittig zu zwei Regaleinheiten angeordnet, die jeweils aus Regalen 20, 30 bzw. 20', 30' bestehen. In Fig. 5 sind ferner jeweils zwei Regaleinheiten hintereinander angeordnet. Das AKL 110 ist hier jeweils einer Regaleinheit zugeordnet. Es ist aber auch möglich ein durchgehendes AKL (nicht gezeigt) für zwei (in Längsrichtung) hintereinander angeordnete Regaleinheiten zu benutzen. In diesem Fall würden vier Regaleinheiten von einem einzigen AKL versorgt werden.

Das AKL 110 ist bei dieser Sandwich-Anordnung der Fig. 5 mittig angeordnet und dient zur Versorgung der Regale 20, 30 bzw. 20', 30' mit Ladehilfsmitteln. Die Ladehilfsmittel werden mit mindestens einem RFZ 112 eingelagert. Das RFZ 112 ist in einer Gasse über die komplette Länge sowie die vollständige Höhe in horizontaler Richtung 114 bzw. vertikaler Richtung 116 verfahrbar. Dazu ist das RFZ 112 mit einem Fahrzeugchassis (nicht gezeigt) ausgestattet, an dem ein Mast mit Hubwerk inklusive LAM befestigt ist. Bei dem LAM handelt es sich vorzugsweise um eine teleskopierbare Einrichtung, um Ladehilfsmittel aus den Regalen des AKL's 110 in die angrenzenden Regale 30 bzw. 20' der seitlich angeordneten Regaleinheiten umsetzen zu können. Alternativ können Fördertechniken zum Transferieren der Ladehilfsmittel zu den Regalen 20, 30 eingesetzt werden.

An den äußeren Längsseiten der Regaleinheiten sind wiederum Lifteinheiten 26 zur Auslagerung von Ladehilfsmitteln vorgesehen. Abgesehen von der Art und Weise, wie Ladehilfsmittel in die Regale eingelagert werden, unterscheiden sich die in Fig. 5 gezeigten Regale nicht von den bisher erläuterten Ausführungsformen. Im Beispiel der Fig. 5 sind die Lifteinheiten 26 mit einer Warenausgangs-Fördertechnik 118 am Arbeitsplatz 28 verbunden, um die Waren und/oder Ladehilfsmittel zu (hier nicht gezeigten) Kommissionierplätzen zu fördern.

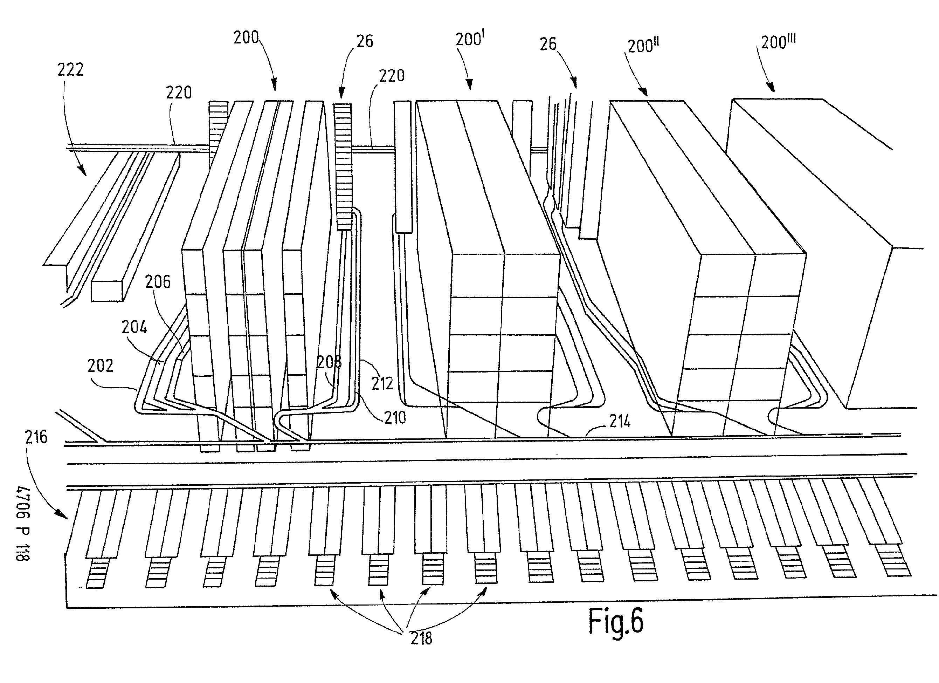

In Fig. 6 ist eine weitere Ausführungsform eines Regallagers gemäß der vorliegenden Erfindung dargestellt.

Es sind insgesamt vier Regallager 200, 200', 200" und 200ʹʹʹ gezeigt. Die Regallager 200, 200', 200" und 200ʹʹʹ sind identisch aufgebaut, weshalb nachfolgend lediglich das Regallager 200 näher erläutert werden wird.

Bei dem Lagerregal 200 wurden zwei Regaleinheiten, die jeweils aus zwei Regalen mit einer dazwischen angeordneten Regalgasse bestehen, direkt nebeneinander angeordnet. In den Regalgassen der einzelnen Ebenen, wobei in der Fig. 6 jeweils fünf Ebenen dargestellt sind, fahren (hier nicht dargestellte) RBG, wie zuvor erläutert.

Ferner sind in Fig. 6 mehrere seitliche Lifteinheiten 26 zu erkennen. Dabei können einige der Lifteinheiten 26 zum Einlagern und andere zum Auslagern der Waren dienen. Auszulagernde Waren werden über Fördertechniken 202-212, die sich entlang den Längsseiten der Regallager erstrecken, ausgelagert und können über eine Sammelfördertechnik 214 zu einem Packbereich 216 mit einer Vielzahl von Packstationen 218 gefördert werden.

Für den Wareneingang in die Regallager kann eine separate Fördertechnik 220 vorgesehen sein. Außerdem kann ein Schnelldreherbereich 222 vorgesehen sein. In diesem Schnelldreherbereich werden Waren bzw. Artikel auf Paletten gelagert, die mit großer Häufigkeit in den Kommissionieraufträgen vorkommen, so dass eine Einlagerung in die Regallager 200 wirtschaftlich nicht sinnvoll wäre. Waren des Schnelldreherbereichs 222 können über eine weitere separate Fördertechnik an die Hauptfördertechnik 214 zum Packbereich 216 gefördert werden.

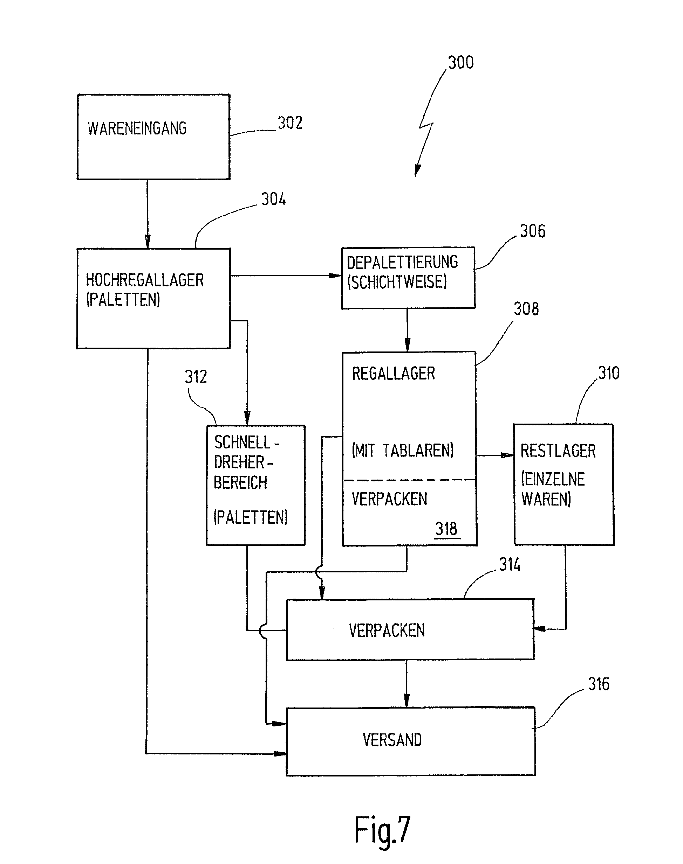

In Fig. 7 ist ein Kommissioniersystem 300 gezeigt, in welchem die Regallager gemäß der vorliegenden Erfindung Verwendung finden.

Ein Wareneingang erfolgt im Block 302. Üblicherweise werden hier Waren z.B. mit Lkws auf Paletten angeliefert, um dann in ein Hochregallager 304 eingelagert zu werden.

Gemäß einer bevorzugten Ausführungsform der Erfindung werden Paletten des Hochregallagers 304, je nach Kommissionierauftrag, dann mittels einer Depalettierungseinrichtung 306 (automatisch und/oder manuell), vorzugsweise schichtweise, auf Tablare depalettiert. Es versteht sich, dass eine Depalettierung auch einzeln und/oder in Behälter erfolgen kann. Nach erfolgter Depalettierung werden die so schichtweise beladenen Tablare in ein Regallager 308 eingelagert. Das Regallager 308 ist dabei so aufgebaut, wie zuvor ausführlich anhand mehrerer Ausführungsformen gemäß der vorliegenden Erfindung erläutert.

Das Verfahren zum Betreiben eines Regallagers, das (ausschließlich) mit Tablaren (Ladehilfsmitteln) bestückt ist, die wiederum jeweils mit einer Palettenlage aus Verpackungseinheiten (Artikeln) beladenen sind, ist ausführlich in der deutschen Patentanmeldung mit dem Titel "Verfahren zum Betreiben einer Kommissionieranlage" beschrieben, die von der Anmelderin der vorliegenden Anmeldung am gleichen Tag wie die vorliegende Anmeldung beim DPMA eingereicht wurde. Der Inhalt der Anmeldung "Verfahren zum Betreiben einer Kommissionieranlage" ist durch Bezugnahme hier integriert.

Artikel, die zur Kommissionierung häufiger benötigt werden, können optional auch in einen Schnelldreherbereich 312 (vergleiche Fig. 6, Schnelldreherbereich 222) transportiert, zwischengelagert und dort kommissioniert werden.

Die im Regallager 308 vorzugsweise auf Tablaren eingelagerten Waren werden gemäß Kommissionieraufträgen ausgelagert und zu einer Packstation 314 gefördert. Artikel, die zur Abarbeitung eines Kommissionierauftrags nicht von dem schichtweise beladenen Tablar benötigt werden, können als Einzelartikel auf Tablaren für Einzelartikel in ein Restlager 310 gefördert werden. Diese Einzelwaren können bei der Abarbeitung späterer Kommissionieraufträge verwendet werden, um fehlende Artikel in der Packstation 314 "aufzufüllen".

Im Packbereich 314, der aus einer Vielzahl von Packstationen bestehen kann, werden die zu kommissionierenden Artikel bzw. Waren z.B. auf Paletten gestapelt bzw. gepackt. Wenn eine Palette vollständig bepackt ist, wird sie in einen Versandbereich 316 gefördert, um verschickt zu werden.

Ein separat zum Regal angeordneter Packplatz ist ausführlich in der deutschen Patentanmeldung mit dem Titel "Separate Packstation" beschrieben, die von der Anmelderin der vorliegenden Anmeldung am gleichen Tag wie die vorliegende Anmeldung beim DPMA eingereicht wurde. Der Inhalt der Anmeldung "Separate Packstation" ist hier durch Bezugnahme integriert.

Der Packvorgang kann optional auch direkt im Bereich des Regallagers 308 erfolgen, wie es durch einen Bereich 318 im Regallager 308 angedeutet ist (vergleiche auch Fig. 4).

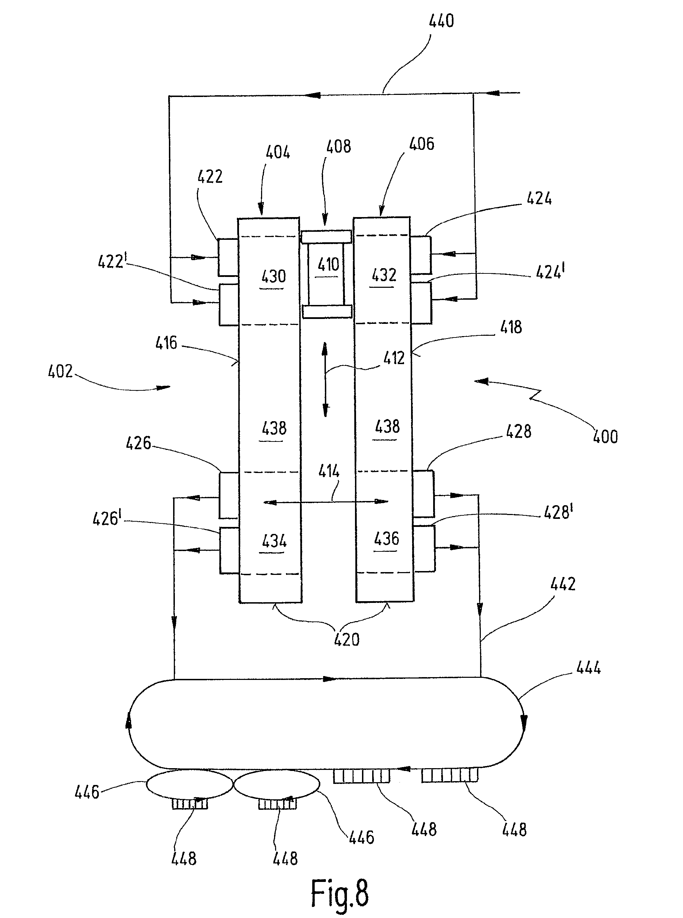

In Fig. 8 ist eine weitere Ausführungsform eines Kommissioniersystems 400 gemäß der vorliegenden Erfindung gezeigt.

Das Kommissioniersystem 400 umfasst ein Regallager 402, welches ein erstes Regal 404 und ein zweites Regal 406 aufweist, die eine Regalgasse 408 zwischen sich definieren. In der Regalgasse 408 ist (pro Regalebene) ein RBG 410 in horizontaler Richtung 412 verfahrbar. Es versteht sich, dass das RBG 410 auch in vertikaler Richtung (d.h. senkrecht zur Zeichnungsebene,) verfahrbar ist, um (hier nicht dargestellte) Regalzeilen in unterschiedlichen Höhen erreichen zu können.

Eine Ein- und Auslagerrichtung ist mit einem Pfeil 414 angedeutet. Das RBG 410 bewegt Ladehilfsmittel im Wesentlichen in Richtung des Pfeils 412.

Eine außenliegende Längsseite des ersten Regals 404 ist mit 416 bezeichnet. Eine außenliegende Längsseite des zweiten Regals 406 ist mit 418 bezeichnet. Stirnseiten des ersten Regals 404 und des zweiten Regals 406 sind mit 420 bezeichnet.

Das erste Regal 404 weist ein erstes Liftpaar 422, 422' auf, das zur Wareneinlagerung dient. Das zweite Regal 406 weist ein zweites Liftpaar 424, 424' auf, das ebenfalls zur Wareneinlagerung dient. Ferner sind ein drittes Liftpaar 426, 426' und ein viertes Liftpaar 428, 428' vorgesehen, die zur Auslagerung von zu kommissionierenden Waren benutzt werden.

In den Regalen 404 und 406 sind wiederum die entsprechenden Transferbereiche 430-436 mit durchgestrichelten Linien angedeutet. "Normale" Regalplätze 438 sind ebenfalls vorgesehen.

Das erste Liftpaar 422, 422' und das zweite Liftpaar 424, 424' sind mit einer Fördertechnik 440 für den Wareneingang verbunden. Wie der Fig. 8 zu entnehmen ist, verzweigt sich die Fördertechnik 440 für den Wareneingang derart, dass jeder Lift des ersten und zweiten Liftpaars mit einem eigenen Fördertechnikzweig zur Einlagerung von Waren verbunden ist. Dies stellt eine Sequenzierungsstufe für eine Kommissionierung dar. Je nach dem, an welchen Lift des ersten und zweiten Liftpaars ein Artikel oder Ladehilfsmittel gegeben wird, erfolgt beispielsweise eine Einlagerung in das linke oder rechte Regal 404 bzw. 406. Die Auswahl des Regalblocks (vgl. Fig. 6) stellt eine weitere Sequenzierungsstufe dar.

Eine andere Sequenzierungsstufe wird mit den Liften 422, 422', 424 und 424' realisiert. Mit den Liften werden die Waren in die unterschiedlichen Regalebenen, die in der Fig. 8 nicht dargestellt sind, in vertikaler Richtung transportiert. Vorausgesetzt die Fördertechnik 440 für den Wareneingang befindet sich auf Bodenniveau, kann anhand der Einlagerungshöhe (Regalebene) gesteuert werden, welche Wege von den zu kommissionierenden Waren durch das Kommissioniersystem 400 (in der Höhe) zurückgelegt werden müssen. Je höher die Regalebene liegt, in die eingelagert werden soll, desto weiter ist der Weg. Es lässt sich also eine ABC-Verteilung in vertikaler Richtung implementieren. A-, B- und C-Artikel unterscheiden sich in der Häufigkeit ihres Auftretens in Kommissionieraufträgen. A-Artikel werden sehr häufig gebraucht, C-Artikel am wenigsten.

Eine weitere Sequenzierungsstufe stellt das RBG 410 dar. Das RBG 410 kann ― in horizontaler Richtung - einzulagernde Ladehilfsmittel näher oder weiter entfernt zu den Liften 426, 426ʹ, 428 und 428' einlagern, die zur Auslagerung der Ladehilfsmittel dienen. Auch hier kann eine ABC-Verteilung realisiert werden.

Die Lifte 426-428' des dritten und vierten Liftpaars können wiederum an eine Fördertechnik 442 zum Auslagern von zu kommissionierenden Waren angeschlossen werden. Vorzugsweise ist die Fördertechnik 442 selbst in eine Vielzahl von Teilförderstücken unterteilt oder sie ist mit einer Sortierfördertechnik 444 verbunden, die sich entweder an weitere Sortierschleifen 446 (Fördertechnik) anschließt oder direkt mit Kommissionierplätzen 448 verbunden ist.

Noch eine weitere Sequenzierungsmöglichkeit bietet sich durch das Verteilen der Artikel in vertikaler Richtung innerhalb ein und derselben Regalebene.

Eine Auswahl eines Lifts der dritten und vierten Liftpaare stellt eine Sequenzierungsstufe dar. Eine weitere Sequenzierungsstufe wird durch die Wahl des Kommissionierplatzes 448 realisiert.

Das in Fig. 8 gezeigte Kommissioniersystem hat den großen Vorteil, dass der Wareneingang vom Warenausgang entkoppelt ist. Zusätzlich ist das RBG 410 von den Liften entkoppelt. Vergleicht man den Warenausgang und den Wareneingang hinsichtlich ihrer jeweiligen statistischen Häufigkeit über den Tag verteilt, so stellt man fest, dass es beim Wareneingang üblicherweise zu drei Spitzen kommt. Diese Spitzen liegen zeitlich in einem Bereich um 7 Uhr, 12 Uhr und 18 Uhr, da dann üblicherweise Waren angeliefert werden. Der Warenausgang steigt ab 7 Uhr stetig an und bleibt ab ca. 11 Uhr bis ca. 18 Uhr auf einem relativ konstanten Niveau, um anschließend wieder bis 20 Uhr auf Null abzufallen. Werden zur Ein- und Auslagerung ein und dieselben Lifte benutzt, wie im Stand der Technik üblich, so können diese Lifte die Doppelbelastungen nicht bewerkstelligen, die auftreten, wenn sich Wareneingangsspitzen ereignen. Das hier vorgeschlagene Regallager ist dazu jedoch in der Lage. Gemäß der vorliegenden Erfindung kann jedoch ein Transferbestand direkt in den verfügbaren Bestand übergeführt werden.

Es versteht sich, dass in dem erfindungsgemäßen Regallager nicht nur ausschließlich Tablare oder ausschließlich Behälter gelagert werden können. Vielmehr können verschiedene Ladehilfsmittel gemeinsam, d.h. gleichzeitig, verwendet werden. Vorzugsweise werden die Regalebenen dann nach Ladehilfsmitteltyp getrennt. Z.B. könnten in einer Regalebene im Wesentlichen Behälter gelagert werden, während in einer anderen Ebene im Wesentlichen Tablare gelagert würden.

Ferner wurden bisher meistens zwei Lifte an einem Arbeitsplatz verwendet. Es versteht sich, dass mehrere Arbeitsplätze direkt nebeneinander angeordnet werden können, die wiederum von mehreren Liften versorgt werden. Ferner kann man die Arbeitsplätze in Gassen zwischen Regaleinheiten anordnen, wie es beispielsweise in der Fig. 5 gezeigt ist. Wenn am Arbeitsplatz direkt, z.B. auf eine Palette, kommissioniert bzw. gepackt wird, könnten mehrere Kommissionierer auf ein und dieselbe Palette packen, wozu die in das Regallager integrierte Packstation (vergleiche Fig. 4) vorzugsweise räumlich zwischen zwei Regallagern (vergleiche Fig. 5) angeordnet wird.

Die Erfindung zeichnet sich ferner dadurch aus, dass sie modular und skalierbar ist. Modular bedeutet in diesem Zusammenhang, dass nahezu alle Elemente der Erfindung manuell oder automatisiert betrieben werden können. Skalierbar bedeutet, dass das erfindungsgemäße Kommissioniersystem bzw. das erfindungsgemäße Regallager nach Leistung und Dimensionierung beliebig geplant werden kann, wobei das allgemeine Konzept immer beibehalten wird.

Ferner versteht es sich, dass die bisher beschriebene Konzeption auch um 90° gedreht werden könnte. Dies bedeutet, dass die Lifte die Funktion des Regalbediengeräts übernehmen könnten, und umgekehrt, dass die Regalbediengeräte die Funktion der Lifte übernehmen könnten. Regalebenen wären dann spaltenförmige Bereiche. Regalzeilen würden durch Regalspalten mit übereinander angeordneten Regalplätzen realisiert werden.

Die Lifte einer Lifteinheit könnten separat zur Einlagerung und Auslagerung verwendet werden, so dass es zur Trennung der Lagerströme nicht erforderlich ist, zwei Lifteinheiten vorzusehen.

Alternativ ist es jedoch auch möglich, einen Lift sowohl zum Einlagern als auch zum Auslagern zu nutzen. In diesem Fall ist es von Vorteil, wenn man mehrere Lifte vorsieht, um eine zufriedenstellende Leistung zu erzielen.

Ferner kann eine Fördertechnik oben auf z.B. einem Regalblock angeordnet werden, die insbesondere eine Schleife über den zwei benachbarten Regalen bildet. Diese zusätzliche Fördertechnik wird vorzugsweise mit der Fördertechnik verbunden, die für den Wareneingang ins Regal verantwortlich ist. Auf diese Weise können Lifte, wie zuvor erwähnt, sowohl zum Einlagern als auch zum Auslagern benutzt werden. Der Warenausgang erfolgt dann z.B. am Fuße des Lifts, wo eine weitere Fördertechnik angeordnet ist, die für den Warenausgang aus dem Regal verantwortlich ist. Außerdem können mit einer Fördertechnikschleife Ladehilfsmittel des einen Regals mit dem anderen Regal getauscht werden. Der Abtransport leerer Ladehilfsmittel kann ebenfalls mit dieser Fördertechnik bewerkstelligt werden. Die Schleife stellt eine weitere Sequenzierungsmöglichkeit dar.

Ein weiterer Vorteil des Regallagers gemäß der vorliegenden Erfindung ist in der Möglichkeit eines stufenförmigen Ausbaus zu sehen. Ergibt sich, dass das Lager vergrößert werden muss, weil z.B. mehr Stellplätze (Regalplätze) benötigt werden, so wird das Regal einfach verlängert. Es werden weitere seitliche Lifte vorgesehen, so dass die Leistungsfähigkeit gehalten oder sogar gesteigert werden kann. Im Stand der Technik mussten dazu neue Gassen gebaut werden.

Mehrere Lifte erhöhen auch die Ausfallsicherheit. Fällt einer der seitlichen Lifte aus, so ist das Regal nicht stillgelegt. Fällt im Stand der Technik der stirnseitige Lift aus, kann die zugehörige Gasse (bzw. die beiden Regale) nicht mehr genutzt werden.

Ferner sei darauf hingewiesen, dass an den Arbeitsplätzen, insbesondere an den Packplätzen, die Versandträger auch mit einem Label versehen werden können. Außerdem kann dort geschlichtet, mit Füllstoffen gearbeitet, gewogen, Versandpapiere erstellt und eine Transportsicherung vorgenommen werden.

Die Erfindung beinhaltet insbesondere die folgenden Gegenstände, welche im Nachfolgenden der Einfachheit halber als Sätze in nummerierter Form aufgelistet sind:
1. Satz. Regallager (10; 100; 200; 308) zum Kommissionieren von in Ladehilfsmitteln (52), insbesondere auf Tablaren, gelagerten Waren, mit zumindest einem Regal (20; 30) mit einer ersten und zweiten Längsseite (24, 25) und zwei Stirnseiten (22, 23), wobei das Regal (20; 30) zumindest eine Regalebene (40-44) aufweist, wobei jede Regalebene (40-44) eine Vielzahl von Regalzeilen (46) aufweist, wobei die Regalzeilen (46) übereinander angeordnet sind und jeweils eine Vielzahl von nebeneinander angeordneten Regalplätzen (48) umfassen, zumindest einem Regalbediengerät (33) pro Regalebene (40-44), das zumindest ein Lastaufnahmemittel zum Einlagern und Auslagern von Ladehilfsmitteln (52) in die bzw. aus den Regalplätzen (48) einer Regalebene (40-44) aufweist, wobei das Regalbediengerät in horizontaler und vertikaler Richtung (37, 35) entlang der ersten Längsseite (25) des Regals (20,30) verfahrbar ist, um in seiner Regalebene (40-44) Ladehilfsmittel (52) einzulagern und auszulagern, und mehreren vertikalen Lifteinheiten (26), die an der zweiten Längsseite (24) des Regals (10) angeordnet sind und die ein Lastaufnahmemittel zum Abholen und Abgeben von Ladehilfsmitteln (52) von bzw. an Transferregallagerplätzen (50) aufweisen.
2. Satz. Regallager nach Satz 1, das ferner zumindest einen Arbeitsplatz (28) aufweist, wobei vorzugsweise jedem Arbeitsplatz (28) zumindest eine Lifteinheit (26) zugeordnet ist und jeder Arbeitsplatz (28) insbesondere eine Einrichtung (58) zum Präsentieren eines Ladehilfsmittels aufweist.
3. Satz. Regallager nach Satz 2, wobei eine erste und eine zweite Lifteinheit (26) vorgesehen sind, wobei der ersten Lifteinheit (26) erste Transferregalplätze (50) zugeordnet sind und wobei die erste Lifteinheit (26) dazu ausgelegt ist, Ladehilfsmittel aus dem Regal abzuholen und zum Arbeitsplatz zu transportieren, und wobei der zweiten Lifteinheit (26) zweite Transferregalplätze (50) zugeordnet sind und wobei die zweite Lifteinheit (26) dazu ausgelegt ist, Ladehilfsmittel an das Regal abzugeben.
4. Satz. Regallager nach Satz 3, wobei die zweite Lifteinheit an eine Wareneingangsförderstrecke gekoppelt ist.
5. Satz. Regallager nach einem der vorgehenden Sätze, wobei die vertikale Lifteinheit (26) mehrere Lastaufnahmemittel aufweist, die einzeln oder paarweise entlang jeweils eines Gestells verfahrbar sind.
6. Satz. Regallager nach Satz 5, wobei das Gestell so angeordnet ist, dass die Lifteinheit (26) den Arbeitsplatz (28) seitlich mit Lademitteln (52) versorgt.
7. Satz. Regallager nach einem der vorhergehenden Sätze, wobei der Arbeitsplatz (28) an eine Warenausgangsförderstrecke gekoppelt ist.
8. Satz. Regallager nach einem der vorhergehenden Sätze, wobei der Arbeitsplatz (28) ferner eine Umladeeinheit (29) umfasst, wobei die Umladeeinheit (29) Waren, die auf bzw. in einem präsentierten Ladehilfsmittel (52) enthalten sind, zur weiteren Verarbeitung umlädt.
9. Satz. Regallager nach Satz 8, wobei die Umladeeinheit eine Bedienperson (29) oder eine Umlademaschine ist.
10. Satz. Regallager nach einem der vorhergehenden Sätze, wobei die Einrichtung (58) zum Präsentieren der Ladehilfsmittel eine Fläche umfasst, auf die bzw. von der das Ladehilfsmittel (52) von der Lifteinheit (26) abgegeben bzw. abgeholt wird, wobei die Fläche vorzugsweise mit Mitteln zum Neigen der Fläche gekoppelt ist.
11. Satz. Regallager nach einem der vorhergehenden Sätze, wobei der Arbeitsplatz (28) ein Gestell (54) nach Art des Regals (20,30) aufweist, wobei das Gestell (54) zusätzliche, übereinander angeordnete Regalplätze (56) zum Lagern von insbesondere Ladehilfsmitteln (52) für Schnellläufer aufweist, wobei diese zusätzlichen Regalplätze (56) derart oberhalb und/oder unterhalb der Einrichtung (58) zum Präsentieren der Ladehilfsmittel, die in das Gestell (54) integriert sein kann, angeordnet sind, dass die dem Arbeitsplatz (28) zugeordnete Lifteinheit (26) die Ladehilfsmittel (52) für Schnellläufer von dort abholen und dorthin abgeben kann.
12. Satz. Regallager nach einem der vorhergehenden Sätze, wobei ein erstes Regal (20) und zweites Regal (30) vorgesehen sind, die entlang der ersten Längsseite gegenüberliegend angeordnet sind, die eine Regaleinheit (10) bilden und die zwischen sich in Längsrichtung jeweils eine Regalgasse (34) definieren, in der die Regalbediengeräte (33) jeder Regalebene (40-44) verfahrbar sind.
13. Satz. Regallager nach Satz 12, wobei mehrere Lifteinheiten (26) mit zugeordneten Arbeitsplätzen (28) vorgesehen sind, wobei die Lifteinheiten (26) jeweils an äußeren Längsseite der Regaleinheit (10) angeordnet sind.
14. Satz. Regallager nach einem der vorhergehenden Sätze, wobei jeder Arbeitsplatz (28) im Bereich der Einrichtung (58) zum Präsentieren der Ladehilfsmittel mit einem Lichtgitter zum Erfassen eines Ladehilfsmittelwechsels zwischen der Lifteinheit (26) und dem Arbeitsplatz (28) und/oder einer Entnahme von Waren aus oder von einem Ladehilfsmittel (52) versehen ist.
15. Satz. Regallager nach einem der vorhergehenden Sätze, wobei das Ladehilfsmittel (52) ein Tablar ist, auf dem Waren sortenrein in Form von vollständigen Palettenschichten gelagert werden.
16. Satz. Regallager nach Satz 15, wobei das Lastaufnahmemittel des Regalbediengeräts (33) bis zu 4 Ladehilfsmittel gleichzeitig aufnehmen und unabhängig voneinander ansteuern kann, und das Lastaufnahmemittel der Lifteinheit (26) mehrere Ladehilfsmittel übereinander und/oder nebeneinander aufnehmen und unabhängig voneinander ansteuern kann.
17. Satz. Regallager nach einem der vorhergehenden Sätze, wobei die ersten Transferregalplätze (50) Regalplätze (48) sind, die während eines Kommissioniervorgangs von der ersten Längsseite des Regals (20, 30) durch das Regalbediengerät (33) mit Ladehilfsmitteln (52) beschickt und von der zweiten Längsseite des Regals (20, 30) von der Lifteinheit (26) geleert werden, und die während eines Einlagerungsvorgangs von der zweiten Längsseite beschickt und von der ersten Längsseite geleert werden.
18. Satz. Regallager nach einem der vorhergehenden Sätze, wobei jede Regalebene (40-44) bis zu 8 Regalzeilen aufweist.
19. Satz. Kommissioniersystem (300) mit einem Regallager (308) nach einem der Sätze 1 bis 17, das ferner aufweist: ein Hochregallager (304) zur Einlagerung, insbesondere schichtweise, beladener Paletten; eine Depalettierungseinrichtung (306) zum Depalettieren der Paletten des Hochregallagers (304); mindestens eine Packstation (314); und eine Versandstation (316).
20. Satz. Kommissioniersystem nach Satz 19, wobei ferner ein Schnelldreher-Lagerbereich (312) vorgesehen ist.
21. Satz. Kommissioniersystem nach Satz 19 oder 20, wobei ferner ein Restwarenlager (310) vorgesehen ist.
22. Satz. Kommissioniersystem nach einem der Sätze 19 bis 21, wobei das Hochregallager (304), das Regallager (308), die Depalettierungseinrichtung (306), die Packstation (314), die Versandstation (316), der Schnelldreher-Lagerbereich (312) oder das Restwarenlager (310) über eine Fördertechnik aneinander gekoppelt sind.
23. Satz. Kommissioniersystem nach Satz 19, wobei die Packstation (318) in den Arbeitsplatz des Regallagers (306) integriert ist.
24. Satz. Kommissionierverfahren zum Kommissionieren von einer Vielzahl von verschiedenen Warentypen, die auf oder in Ladehilfsmitteln (52), insbesondere Tablaren, gelagert sind, gemäß einem Kommissionierauftrag, mit folgenden Schritten: Unterteilen eines Regals (20, 30) eines Regallagers (10) in zumindest eine Regalebene (40-44), die jeweils eine Vielzahl von übereinander angeordneten Regalzeilen (46), die jeweils eine Vielzahl von nebeneinander liegenden Regalplätzen (48) aufweisen, und die ein vertikal und horizontal verfahrbares Regalbediengerät (33) umfasst; jedem Warentyp zumindest einen Regalplatz (48) Zuordnen und Einlagern von zumindest allen Warentypen, die für eine Abarbeitung des Kommissionierauftrags erforderlich sind, in die zugeordneten Regalplätze (48); und Abarbeiten des Kommissionierauftrags; wobei der Schritt des Abarbeitens folgende Schritte aufweist: Ansteuern eines Regalbediengeräts (33), so dass das Regalbediengerät (33) ein Ladehilfsmittel (52), das einen zum Kommissionierauftrag gehörigen Warentyp enthält, aus dem zugeordneten Regalplatz (48) ausgelagert und in einen Transferregalplatz (50) einlagert; Ansteuern einer von mehreren seitlich zum Regal (20, 30) angeordneten, vertikalen Lifteinheiten (26), so dass die Lifteinheit (26) das Ladehilfsmittel (52) vom Transferregalplatz (50) abholt und an einen Arbeitsplatz (28) abgibt; und Umladen von Waren aus bzw. von dem Ladehilfsmittel (52) oder des Ladehilfsmittels zum Transport an eine Packstation.
25. Satz. Verfahren nach Satz 24, wobei das Einlagern von Ladehilfsmitteln (52) in das Regal (20, 30) ausschließlich über eine weitere, seitlich angeordneten Lifteinheit (26) geschieht.
26. Satz. Verfahren nach Satz 25, wobei die weitere, seitlich angeordnete Lifteinheit (26) Ladehilfsmittel (52) an Einlagertransferregalplätze im Regal übergibt, woraufhin das Regalbediengerät (33) dieses Ladehilfsmittel (52) aus dem Einlagertransferregalplatz auslagert und entweder in einen Regalplatz (48) oder in einen Transferregalplatz (50) einlagert.
27. Satz. Verfahren nach einem der Sätze 24 bis 26, wobei die Lifteinheit (26) ein Ladehilfsmittel (52) für Schnellläufer von einem Transferregalplatz (50) abholt und an einen zusätzlichen Regalplatz (56) abgibt, der oberhalb und/oder unterhalb des Arbeitsplatzes (28) vorgesehen ist.
28. Satz. Verfahren nach einem der Sätze 24 bis 27, wobei eine Abgabe oder Abholung eines Ladehilfsmittels (52) an den bzw. von dem Arbeitsplatz (28) mit einer Sensoreinheit erfasst wird, um zu verhindern, dass ein Ladehilfsmitteltransfer zwischen dem Arbeitsplatz (28) und der Lifteinheit (26) stattfindet, während eine Bedienperson (29) im Bereich des Transfers tätig ist, und um Entnahmen von Waren aus bzw. von dem Ladehilfsmittel (52) zu erfassen.
29. Satz. Verfahren nach einem der Sätze 24 bis 28, wobei das Regalbediengerät (33) mehrere Lastaufnahmemittel aufweist und während einer einzigen horizontalen Fahrt ein Ladehilfsmittel (52) zum Kommissionieren auslagert und ein Ladehilfsmittel (52) zum Lagern einlagert.
30. Satz. Verfahren nach einem der Sätze 24 bis 29, wobei die Lifteinheit mehrere separat vertikal verfahrbare und ansteuerbare Lifte (26') mit Lastaufnahmemittel aufweist und Ladehilfsmittel (52) an den Arbeitsplatz (28) liefert und gleichzeitig Ladehilfsmittel (52) von dem Arbeitsplatz (28) abholt.
31. Satz. Verfahren nach einem der Sätze 24 bis 30, wobei der Arbeitsplatz (28) eine Einrichtung (58) zum Präsentieren der Ladehilfsmittel aufweist, die zur Entnahme der Ware oder des Ladehilfsmittels geneigt werden.

## Patentansprüche

1. Regallager (10; 100; 200; 308) zum Kommissionieren von in Ladehilfsmitteln (52), insbesondere auf Tablaren, gelagerten Waren, mit
zumindest einem Regal (20; 30) mit einer ersten und zweiten Längsseite (24, 25) und zwei Stirnseiten (22, 23), wobei das Regal (20; 30) mehrere Regalebenen (40-44) aufweist, wobei jede Regalebene (40-44) eine Vielzahl von Regalzeilen (46) aufweist, wobei die Regalzeilen (46) übereinander angeordnet sind und jeweils eine Vielzahl von nebeneinander angeordneten Regalplätzen (48) umfassen, wobei das Regal (20; 30) mehrere Transferregalplätze (50) pro Regalebene (40-44) aufweist,
zumindest einem Regalbediengerät (33) pro Regalebene (40-44), das zumindest ein Lastaufnahmemittel zum Einlagern und Auslagern von Ladehilfsmitteln (52) in die bzw. aus den Regalplätzen (48) und Transferregalplätzen (50) einer Regalebene (40-44) aufweist, wobei das Regalbediengerät in horizontaler und vertikaler Richtung (37, 35) entlang der ersten Längsseite (25) des Regals (20,30) verfahrbar ist, um in seiner Regalebene (40-44) Ladehilfsmittel (52) einzulagern und auszulagern, und
mehreren vertikalen Lifteinheiten (26), die an der zweiten Längsseite (24) des Regals (10) angeordnet sind und die ein Lastaufnahmemittel zum Abholen und Abgeben von Ladehilfsmitteln (52) von den bzw. an die Transferregalplätzen (50) aufweisen.

2. Regallager nach Anspruch 1, das ferner zumindest einen Arbeitsplatz (28) aufweist, wobei vorzugsweise jedem Arbeitsplatz (28) zumindest eine Lifteinheit (26) zugeordnet ist und jeder Arbeitsplatz (28) insbesondere eine Einrichtung (58) zum Präsentieren eines Ladehilfsmittels aufweist.

3. Regallager nach Anspruch 2, wobei eine erste und eine zweite Lifteinheit (26) vorgesehen sind, wobei der ersten Lifteinheit (26) erste Transferregalplätze (50) zugeordnet sind und wobei die erste Lifteinheit (26) dazu ausgelegt ist, Ladehilfsmittel aus dem Regal abzuholen und zum Arbeitsplatz zu transportieren, und wobei der zweiten Lifteinheit (26) zweite Transferregalplätze (50) zugeordnet sind und wobei die zweite Lifteinheit (26) dazu ausgelegt ist, Ladehilfsmittel an das Regal abzugeben.

4. Regallager nach einem der vorgehenden Ansprüche, wobei die vertikale Lifteinheit (26) mehrere Lastaufnahmemittel aufweist, die einzeln oder paarweise entlang jeweils eines Gestells verfahrbar sind.

5. Regallager nach Anspruch 4, wobei das Gestell so angeordnet ist, dass die Lifteinheit (26) den Arbeitsplatz (28) seitlich mit Lademitteln (52) versorgt.

6. Regallager nach einem der vorhergehenden Ansprüche, wobei der Arbeitsplatz (28) ein Gestell (54) nach Art des Regals (20,30) aufweist, wobei das Gestell (54) zusätzliche, übereinander angeordnete Regalplätze (56) zum Lagern von insbesondere Ladehilfsmitteln (52) für Schnellläufer aufweist, wobei diese zusätzlichen Regalplätze (56) derart oberhalb und/oder unterhalb der Einrichtung (58) zum Präsentieren der Ladehilfsmittel, die in das Gestell (54) integriert sein kann, angeordnet sind, dass die dem Arbeitsplatz (28) zugeordnete Lifteinheit (26) die Ladehilfsmittel (52) für Schnellläufer von dort abholen und dorthin abgeben kann.

7. Regallager nach einem der vorhergehenden Ansprüche, wobei ein erstes Regal (20) und zweites Regal (30) vorgesehen sind, die entlang der ersten Längsseite gegenüberliegend angeordnet sind, die eine Regaleinheit (10) bilden und die zwischen sich in Längsrichtung jeweils eine Regalgasse (34) definieren, in der die Regalbediengeräte (33) jeder Regalebene (40-44) verfahrbar sind.

8. Regallager, nach Anspruch 7, wobei mehrere Lifteinheiten (26) mit zugeordneten Arbeitsplätzen (28) vorgesehen sind, wobei die Lifteinheiten (26) jeweils an äußeren Längsseite der Regaleinheit (10) angeordnet sind.

9. Regallager nach einem der vorhergehenden Ansprüche, wobei das Ladehilfsmittel (52) ein Tablar ist, auf dem Waren sortenrein in Form von vollständigen Palettenschichten gelagert werden.

10. Regallager nach Anspruch 9, wobei das Lastaufnahmemittel des Regalbediengeräts (33) bis zu 4 Ladehilfsmittel gleichzeitig aufnehmen und unabhängig voneinander ansteuern kann, und das Lastaufnahmemittel der Lifteinheit (26) mehrere Ladehilfsmittel übereinander und/oder nebeneinander aufnehmen und unabhängig voneinander ansteuern kann.

11. Regallager nach einem der vorhergehenden Ansprüche, wobei die Transferregalplätze (50) Regalplätze (48) sind, die während eines Kommissioniervorgangs von der ersten Längsseite des Regals (20, 30) durch das Regalbediengerät (33) mit Ladehilfsmitteln (52) beschickt und von der zweiten Längsseite des Regals (20, 30) von der Lifteinheit (26) geleert werden, und die während eines Einlagerungsvorgangs von der zweiten Längsseite beschickt und von der ersten Längsseite geleert werden.

12. Kommissioniersystem (300) mit einem Regallager (308) nach einem der Ansprüche 1 bis 11, das ferner aufweist:
ein Hochregallager (304) zur Einlagerung, insbesondere schichtweise, beladener Paletten;
eine Depalettierungseinrichtung (306) zum Depalettieren der Paletten des Hochregallagers (304);
mindestens eine Packstation (314); und
eine Versandstation (316).

13. Kommissionierverfahren zum Kommissionieren von einer Vielzahl von verschiedenen Warentypen, die auf oder in Ladehilfsmitteln (52), insbesondere Tablaren, gelagert sind, gemäß einem Kommissionierauftrag, wobei ein Regallager nach einem der Ansprüche 1 bis 11 vorgesehen ist, mit folgenden Schritten:
jedem Warentyp zumindest einen Regalplatz (48) Zuordnen und Einlagern von zumindest allen Warentypen, die für eine Abarbeitung des Kommissionierauftrags erforderlich sind, in die zugeordneten Regalplätze (48); und
Abarbeiten des Kommissionierauftrags;
wobei der Schritt des Abarbeitens folgende Schritte aufweist:
Ansteuern eines Regalbediengeräts (33), so dass das Regalbediengerät (33) ein Ladehilfsmittel (52), das einen zum Kommissionierauftrag gehörigen Warentyp enthält, aus dem zugeordneten Regalplatz (48) ausgelagert und in einen Transferregalplatz (50) einlagert;
Ansteuern einer von mehreren seitlich zum Regal (20, 30) angeordneten, vertikalen Lifteinheiten (26), so dass die Lifteinheit (26) das Ladehilfsmittel (52) vom Transferregalplatz (50) abholt und an einen Arbeitsplatz (28) abgibt; und
Umladen von Waren aus bzw. von dem Ladehilfsmittel (52) oder des Ladehilfsmittels zum Transport an eine Packstation.

14. Verfahren nach Anspruch 13, wobei die Lifteinheit (26) ein Ladehilfsmittel (52) für Schnellläufer von einem Transferregalplatz (50) abholt und an einen zusätzlichen Regalplatz (56) abgibt, der oberhalb und/oder unterhalb des Arbeitsplatzes (28) vorgesehen ist.

15. Verfahren nach Anspruch 13, wobei die Lifteinheit mehrere separat vertikal verfahrbare und ansteuerbare Lifte (26') mit Lastaufnahmemittel aufweist und Ladehilfsmittel (52) an den Arbeitsplatz (28) liefert und gleichzeitig Ladehilfsmittel (52) von dem Arbeitsplatz (28) abholt.
